(19) Europäisches Patentamt
European Patent Office
Office européen des brevets

(11) **EP 2 493 196 A1**

(12) **EUROPEAN PATENT APPLICATION**
published in accordance with Art. 153(4) EPC

(43) Date of publication:
**29.08.2012 Bulletin 2012/35**

(51) Int Cl.:
***H04N 7/32*** *(2006.01)*

(21) Application number: **10824755.2**

(22) Date of filing: **17.09.2010**

(86) International application number:
**PCT/JP2010/066248**

(87) International publication number:
**WO 2011/048904 (28.04.2011 Gazette 2011/17)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **20.10.2009 JP 2009241339**

(71) Applicant: **Sharp Kabushiki Kaisha**
**Osaka-shi, Osaka 545-8522 (JP)**

(72) Inventors:
• **YAMAMOTO, Tomoyuki**
**Osaka 545-8522 (JP)**
• **IKAI, Tomohiro**
**Osaka 545-8522 (JP)**

(74) Representative: **Müller - Hoffmann & Partner**
**Patentanwälte**
**Innere Wiener Strasse 17**
**81667 München (DE)**

(54) **IMAGE ENCODING APPARATUS, IMAGE DECODING APPARATUS, AND DATA STRUCTURE OF ENCODED DATA**

(57)     An image encoding apparatus of the present invention includes a TM prediction section (105) that generates a predicted image for each of prediction units. This TM prediction section (105) uses, as a template, a rectangular region on the decoded image, which rectangular region faces a longer side of a subject rectangular region, and searches for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region. This allows for accomplishing an image encoding apparatus having high encoding efficiency, even in a case in which an image to be encoded includes an edge whose curvature varies.

FIG. 1

**Description**

Technical Field

The present invention relates to an image encoding apparatus and an image encoding method, each of which generates encoded data by encoding an image. Moreover, the present invention relates to an image decoding apparatus and an image decoding method, each of which generates an image by decoding the encoded data generated by such an image encoding apparatus.

Background Art

Dynamic image encoding apparatuses have been used for efficiently transmitting or recording dynamic images. An example of an encoding system of dynamic images employed in a dynamic image encoding apparatus is, for example, H.264/AVC described in Non Patent Literature 1.

The foregoing encoding system encodes an image to be encoded upon segmenting the image into a plurality of blocks. Moreover, in order to enhance encoding efficiency, the following technique is employed: a decoded region inside a same frame as a subject block is referred to, to generate a predicted image, and a difference image between the predicted image and the subject block is encoded.

Patent Literature 1 discloses an image predictive encoding apparatus which generates a predictive signal with respect to a region subjected to prediction, by setting (a) a subject adjacent region having an inverted-L shape, positioned adjacent to the region subjected to prediction, and (b) a search region; search is carried out in the search region for a predictive adjacent region, which is a region having a smallest sum of absolute errors with respect to the subject adjacent region, and a region adjacent to the predictive adjacent region serves as a texture signal with respect to the region subjected to prediction.

Citation List

Patent Literature

   Patent Literature 1
   Japanese Patent Application Publication, Tokukai, No. 2007-300380 A (Publication Date: November 15, 2007)

Non Patent Literature

   Non Patent Literature 1
   ITU-T Recommendation H.264 (11/07) (Publication Date: November 2007)

Summary of Invention

Technical Problem

However, the technique disclosed in Patent Literature 1 carries out the search in a region similar to the subject adjacent region of the inverted-L shape by scanning the search region two-dimensionally. Hence, the computational complexity increases when carrying out the search, thereby causing a decrease in the speed in which the predicted image is generated.

Moreover, in the technique disclosed in Patent Literature 1, the region subjected to prediction is set as a square shape. Hence, in a case in which the image to be encoded includes an edge whose curvature varies, it is not possible to search for an appropriate predictive adjacent region; this causes a problem of a decrease in the encoding efficiency.

The present invention is accomplished in view of the foregoing problems, and it is an object of the present invention to achieve an image encoding apparatus which enables achievement of high encoding efficiency even if an edge whose curvature varies is included in the image to be encoded, while reducing computational complexity during carrying out a search.

Solution to Problem

In order to attain the object, an image encoding apparatus according to the present invention is an image encoding apparatus that encodes a subject image segmented into a plurality of blocks, the encoding being carried out every block, the image encoding apparatus including: quantization means for quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in units for quantization, the units for quantization including at least one rectangular region selected from the plurality of rectangular regions; inverse quantization means for generating a decoded image on the subject block in the units for quantization, the inverse quantization means generating the decoded image on a subject unit for quantization by adding, to the predicted image, a prediction residual obtained by inverse quantizing a quantized value generated in the quantization means; and predicted image generation means for generating the predicted image on the subject block for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

According to the image encoding apparatus of the present invention, a rectangular region on the decoded image, which rectangular region faces a longer side of a subject rectangular region, is used as a template, and the predicted image on the subject rectangular region can be generated by searching for a region having a highest correlation with the template out of regions on a decoded image obtained by parallel shifting a rectangular region in a longer side direction, which rectangular region faces a longer side of the template opposite to a side of the template facing the subject rectangular region.

Namely, according to the image encoding apparatus, a region having a highest correlation with the template is searched for by one-dimensionally scanning a region on a decoded image obtained by parallel shifting on the rectangular region in a longer side direction. As a result, with the image encoding apparatus, the computational complexity during carrying out a search can be reduced as compared to when scanning is carried out two-dimensionally as in the technique disclosed in Patent Literature 1. This brings about an effect that a predicted image can be generated in high speed.

Moreover, the image encoding apparatus carries out a search every rectangular region. This enables accurate generation of a predicted image even in a case in which the subject image includes an edge whose curvature varies. Namely, even in the case in which the subject image includes an edge whose curvature varies, an effect is brought about that the encoding efficiency is high.

In order to attain the object, a data structure of encoded data according to the present invention is a data structure of encoded data obtained by encoding a subject image segmented into a plurality of blocks, the encoding being carried out every block, the data structure including encoded data generated by quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in units for quantization, the units for quantization including at least one rectangular region selected from the plurality of rectangular regions, the predicted image on the subject block being generated for every rectangular region, and predicted images on the rectangular regions being generated by using, as a template, a rectangular region facing a longer side of a subject rectangular region on the decoded image, and searching for a region having a highest correlation with the template out of regions on a decoded image obtained by parallel shifting a rectangular region in a longer side direction, the rectangular region facing a longer side of the template opposite of a side of the template that faces the subject rectangular region.

With the data structure according to the present invention of the encoded data, it is possible to carry out a decoding process in a decoding apparatus based on predicted images of the rectangular regions and quantized prediction residuals in the units for quantization. As a result, an effect is brought about that a data structure of encoded data having a high decoding efficiency is achievable.

In order to attain the object, an image decoding apparatus according to the present invention is an image decoding apparatus that generates a decoded image segmented into a plurality of blocks, the decoded image being generated every block, the image decoding apparatus including: inverse quantization means for generating a decoded image on a subject block that is segmented into a plurality of rectangular regions in such a manner that longer sides of the rectangular regions are arranged adjacent to each other, the decoded image being generated in units for quantization, the units for quantization including at least one rectangular region selected from the plurality of rectangular regions, the inverse quantization means generating the decoded image on a subject unit for quantization by adding, to a predicted image, a prediction residual obtained by inverse quantizing a quantization value; and predicted image generation means for generating the predicted image for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

According to the image decoding apparatus of the present invention, a rectangular region on the decoded image, which rectangular region faces a longer side of a subject rectangular region, is used as a template, and the predicted image on the subject rectangular region can be generated by searching for a region having a highest correlation with the template out of regions on a decoded image obtained by parallel shifting a rectangular region in a longer side direction, which rectangular region faces a longer side of the template opposite to a side of the template facing the subject rectangular region.

Namely, according to the image decoding apparatus, a region having a highest correlation with the template is searched for by one-dimensionally scanning a region on a decoded image obtained by parallel shifting on the rectangular region in a longer side direction. As a result, with the image decoding apparatus, the computational complexity during carrying out a search can be reduced as compared to when scanning is carried out two-dimensionally as in the technique disclosed in Patent Literature 1. This brings about an effect that a predicted image can be generated in high speed.

Moreover, the image decoding apparatus carries out a search every rectangular region. This brings about an effect that it is possible for accurate generation of a predicted image even in a case in which the subject image includes an edge whose curvature varies.

Advantageous Effects of Invention

As described above, according to the present invention, it is possible to generate a predicted image in a higher speed as compared to a case in which the predicted image is generated by a search carried out two-dimensionally. Moreover, even in a case in which the image to be encoded includes an edge whose curvature varies, it is possible to carry out encoding with high encoding efficiency.

Brief Description of Drawings

Fig. 1

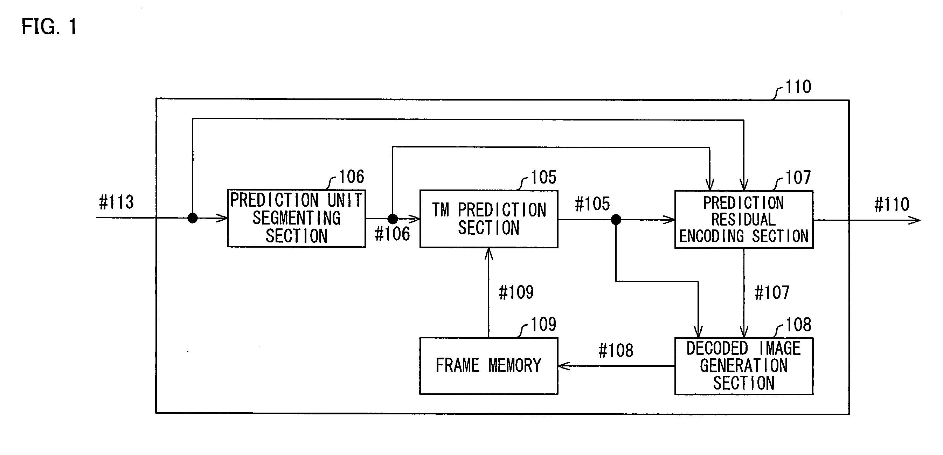

Fig. 1 is a block diagram of an MB encoding section according to the first embodiment of the present invention.
Fig. 2

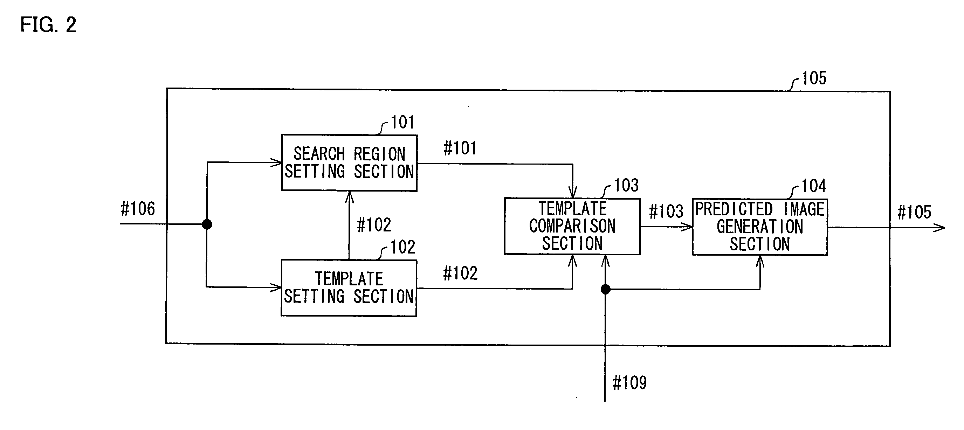

Fig. 2 is a block diagram illustrating a configuration of a TM prediction section provided in the MB encoding section illustrated in Fig. 1.
Fig. 3

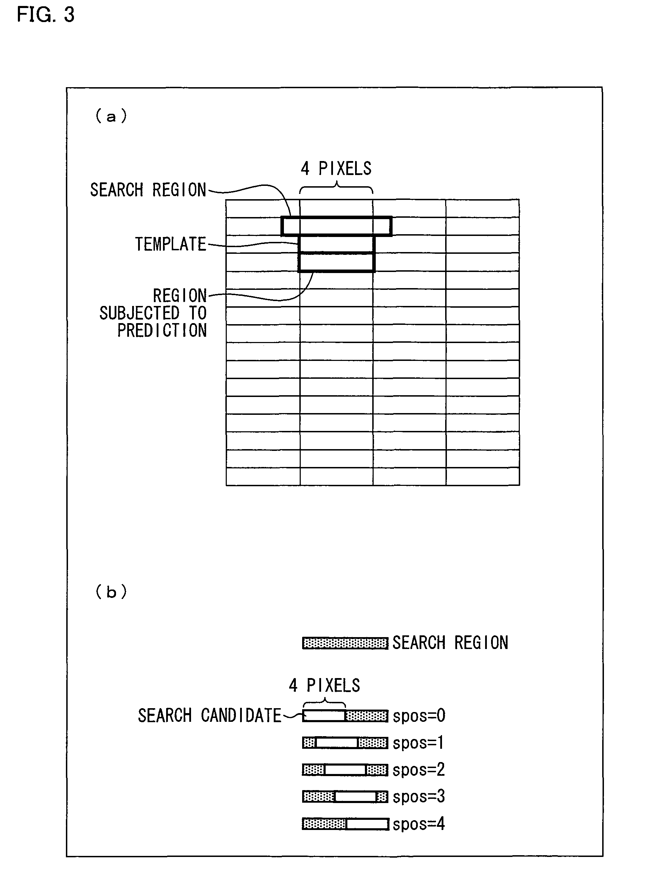

Fig. 3 is a view for describing operations of the TM prediction section illustrated in Fig. 2. Illustrated in (a) is a relation between (i) a region subjected to prediction, (ii) a template, and (iii) a search region, and illustrated in (b) is a relation between the search region and a search candidate.
Fig. 4

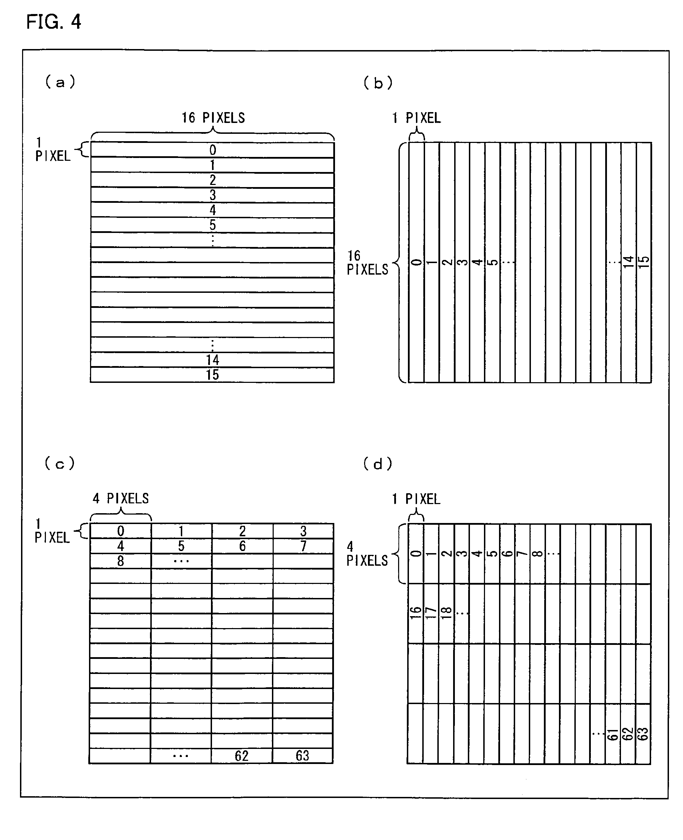

Fig. 4 is a view illustrating a relation between a subject macro block and a prediction unit. Illustrated in (a) is a case in which the prediction unit is sized as 16 pixels $\times$ 1 pixel, illustrated in (b) is a case in which the prediction unit is sized as 1 pixel $\times$ 16 pixels, illustrated in (c) is a case in which the prediction unit is sized as 4 pixels $\times$ 1 pixel, and illustrated in (d) is a case in which the prediction unit is sized as 1 pixel $\times$ 4 pixels.
Fig. 5

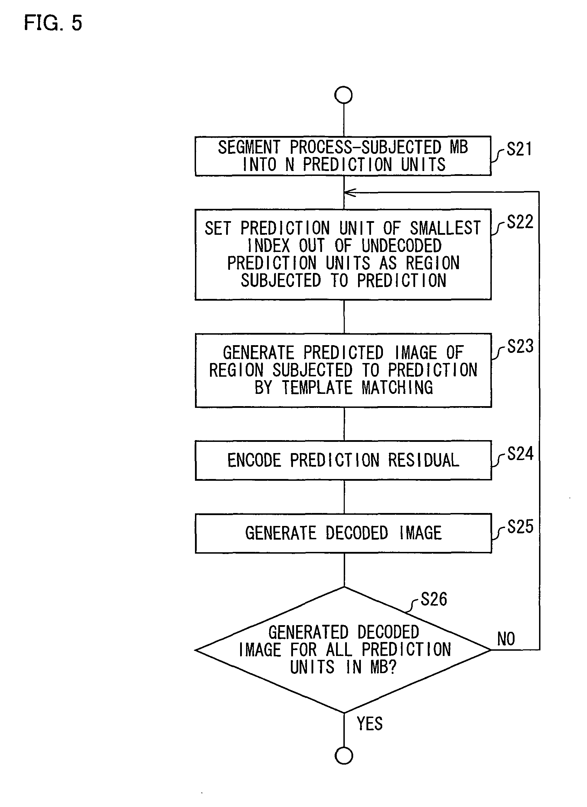

Fig. 5 is a flowchart illustrating steps of encoded data generation carried out in the MB encoding section illustrated in Fig. 1.
Fig. 6

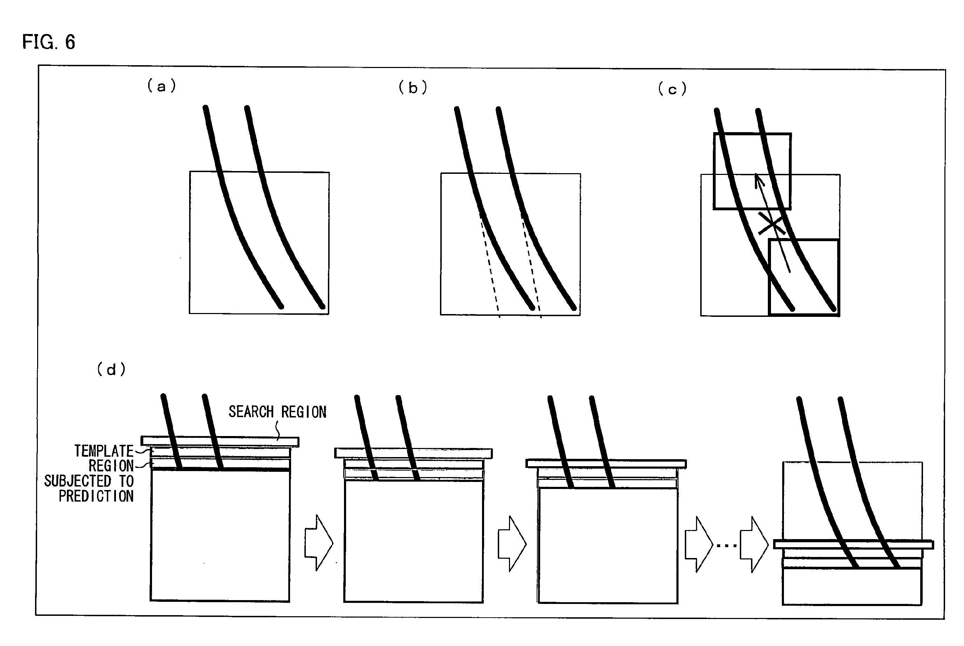

Fig. 6 is a view for describing an effect of the present invention. Illustrated in (a) is a case in which a subject macro block includes two curved edges, each of which run from upper to lower of the subject macro block and has a greater curvature as the curved edge extends downwards of the MB, illustrated in (b) is a predicted image in a case in which prediction is carried out by direction prediction, illustrated in (c) is a case in which intra TM prediction is carried out with use of a square region as a prediction unit, and illustrated in (d) is a case in which encoding is carried out by the MB encoding section illustrated in Fig. 1, with use of 16 $\times$ 1 pixels as a prediction unit.
Fig. 7

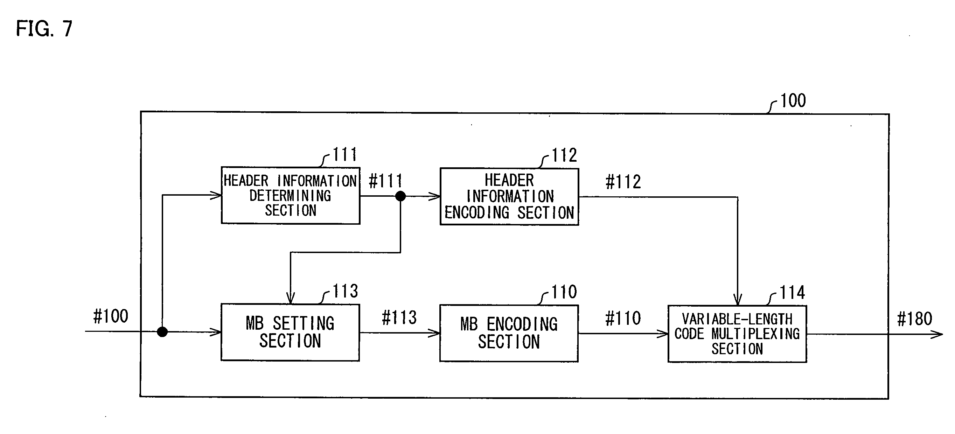

Fig. 7 is a block diagram illustrating a configuration of an image encoding apparatus including the MB encoding section illustrated in Fig. 1.

Fig. 8

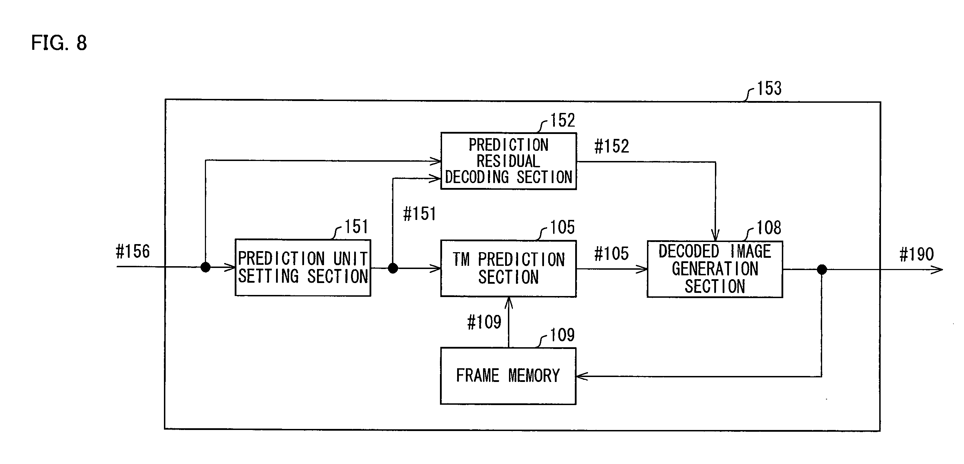

Fig. 8 is a block diagram illustrating a configuration of an MB decoding section according to the first embodiment of the present invention.

Fig. 9

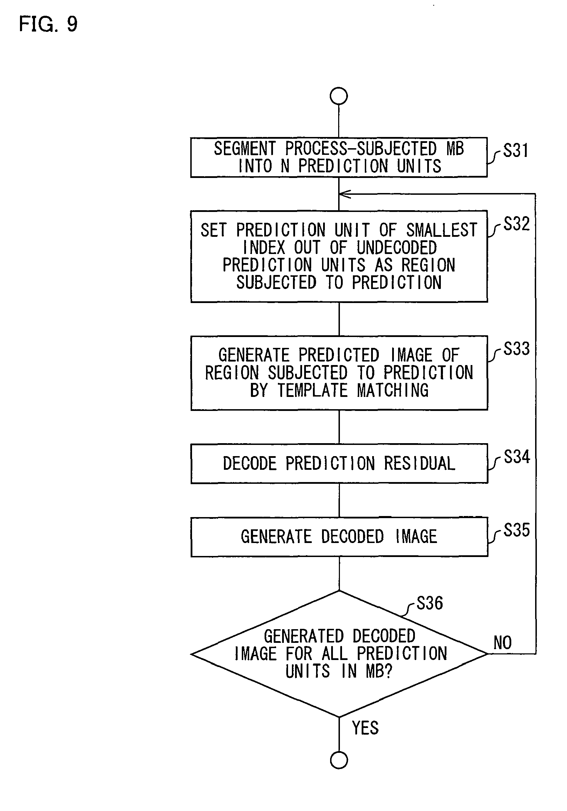

Fig. 9 is a flowchart illustrating steps of a decoding process carried out in the MB decoding section illustrated in Fig. 8.

Fig. 10

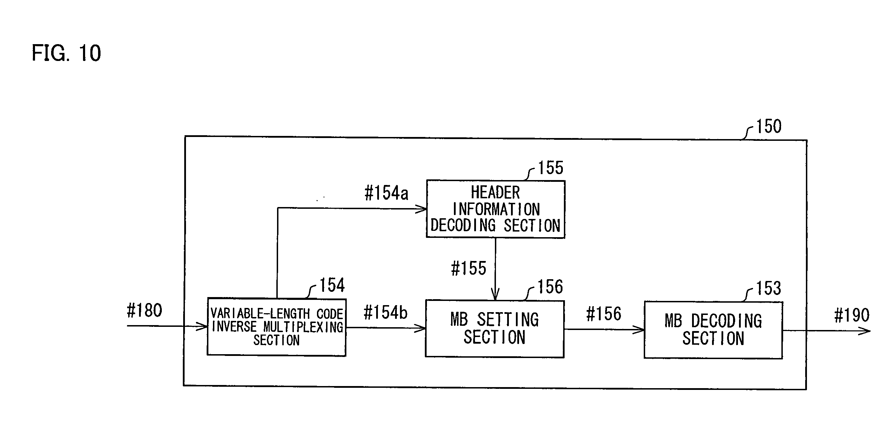

Fig. 10 is a block diagram illustrating a configuration of an image decoding apparatus including the MB decoding section illustrated in Fig. 7.

Fig. 11

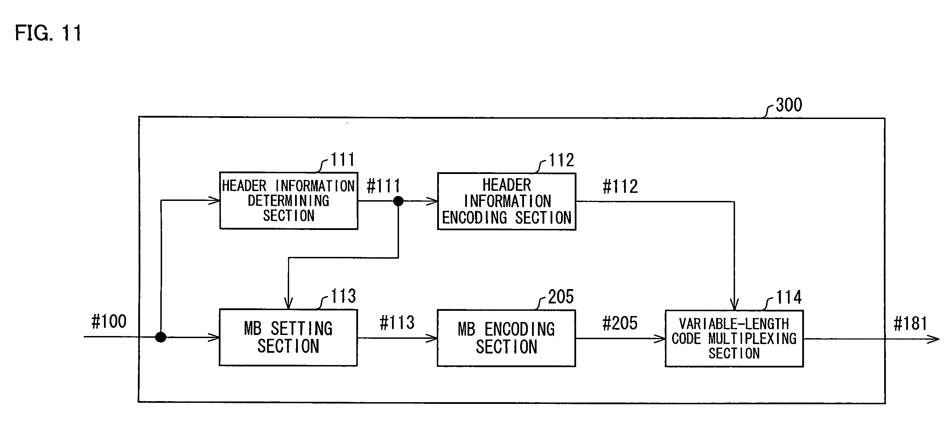

Fig. 11 is a block diagram illustrating a configuration of an image encoding apparatus according to the second embodiment of the present invention.

Fig. 12

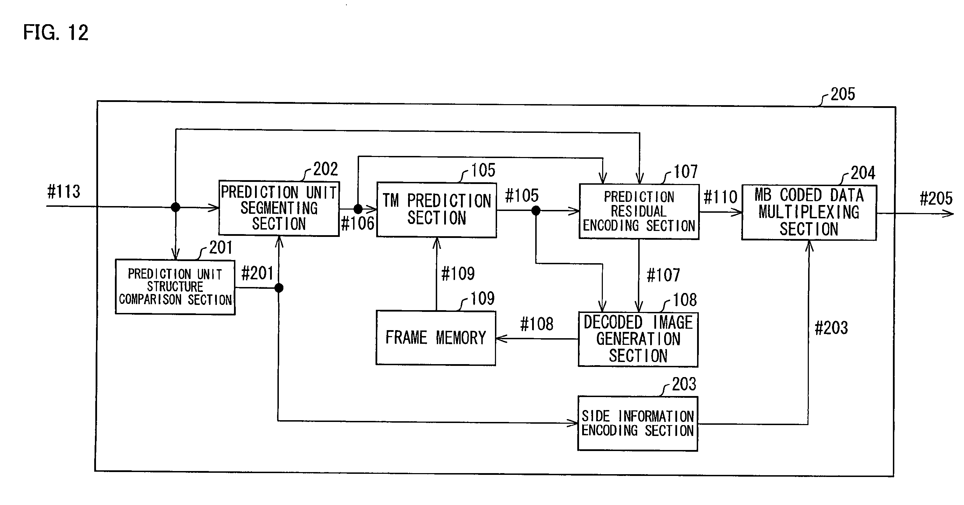

Fig. 12 is a block diagram illustrating a configuration of an MB encoding section included in the image encoding apparatus illustrated in Fig. 11.

Fig. 13

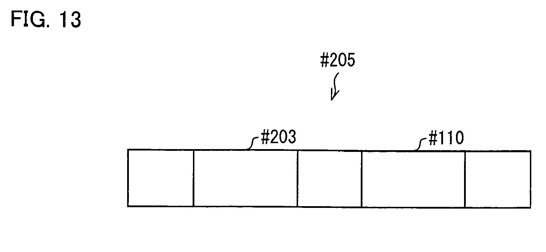

Fig. 13 is a view illustrating a bit stream configuration of encoded data generated by the image encoding apparatus illustrated in Fig. 11.

Fig. 14

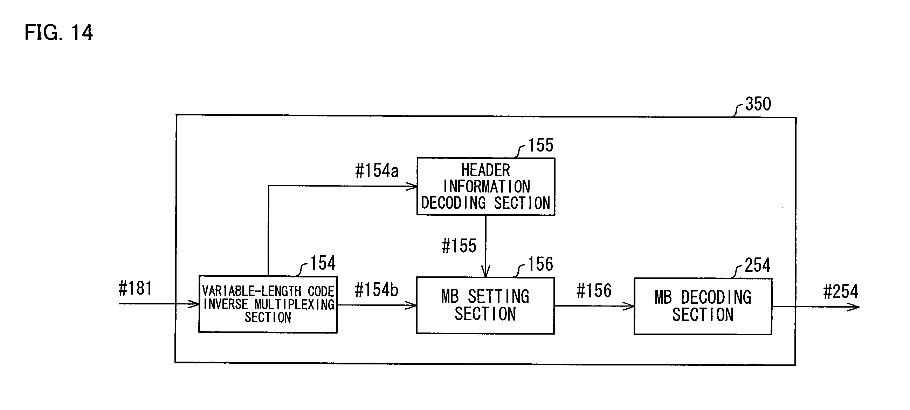

Fig. 14 is a block diagram illustrating a configuration of an image decoding apparatus according to the second embodiment of the present invention.

Fig. 15

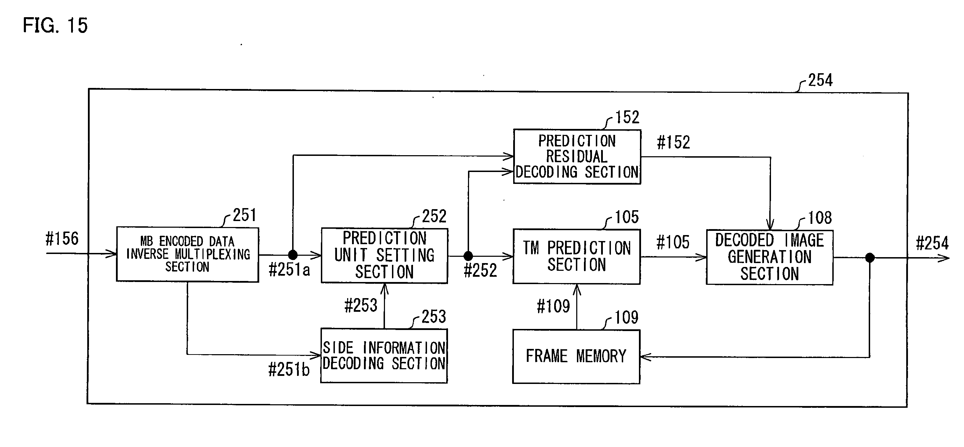

Fig. 15 is a block diagram illustrating a configuration of an MB decoding section included in the image decoding apparatus illustrated in Fig. 14.

Fig. 16

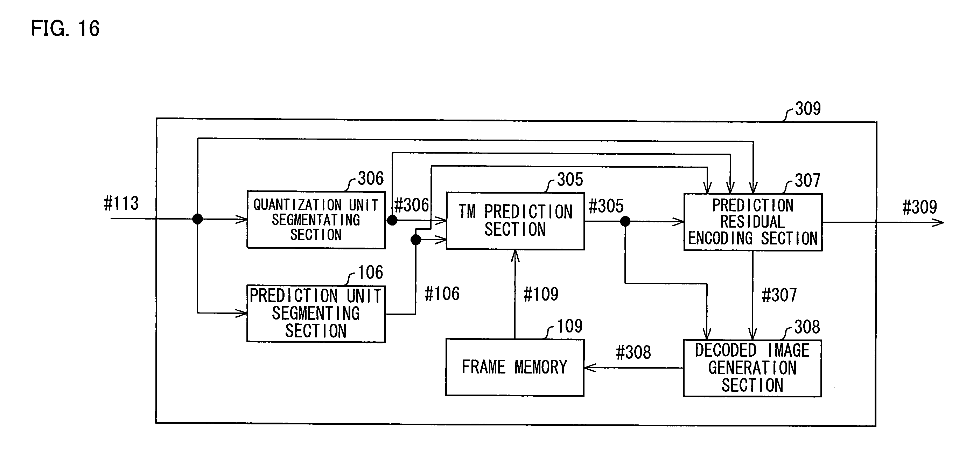

Fig. 16 is a block diagram illustrating a configuration of an MB encoding section included in an image encoding apparatus according to the third embodiment of the present invention.

Fig. 17

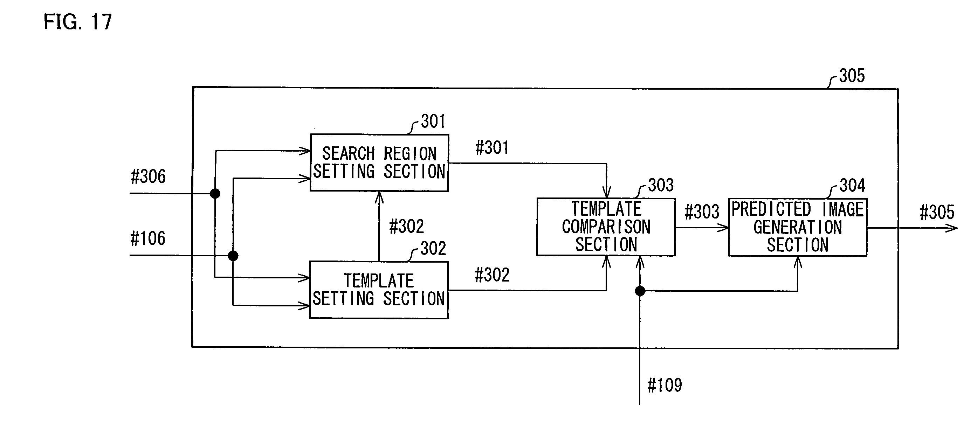

Fig. 17 is a block diagram illustrating a configuration of a TM prediction section included in the MB encoding section illustrated in Fig. 16.

Fig. 18

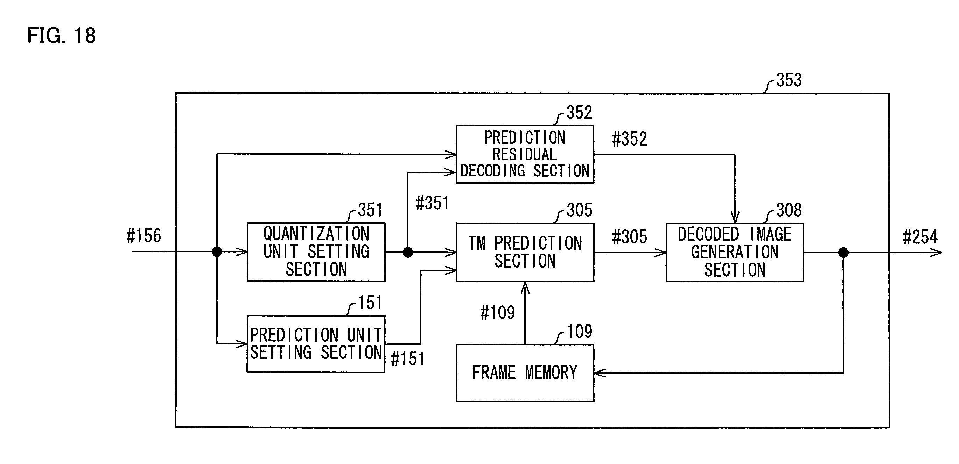

Fig. 18 is a block diagram illustrating a configuration of an MB decoding section included in the image decoding apparatus according to the third embodiment of the present invention.

Fig. 19

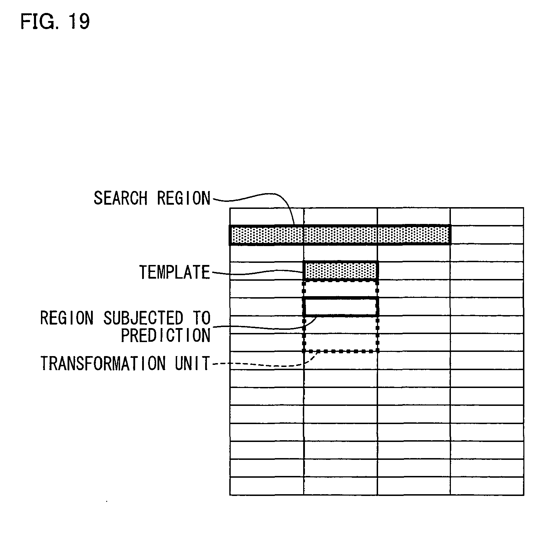

Fig. 19 is a view describing operations of a template setting section and a search region setting section, in the third embodiment.

Fig. 20

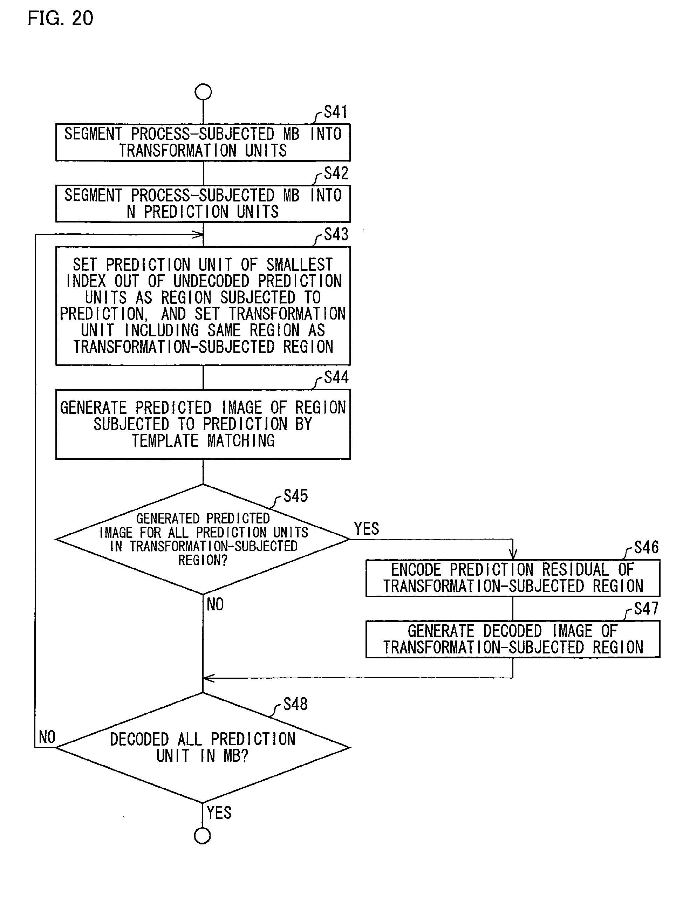

Fig. 20 is a flowchart illustrating steps of generating encoded data carried out in the MB encoding section illustrated in Fig. 16.

Description of Embodiments

Embodiment 1

The following description explains an image encoding apparatus 100 and an image decoding apparatus 150, which are the first embodiments of the image encoding apparatus and the image decoding apparatus according to the present invention, respectively, with reference to Fig. 1 through Fig. 10. In the description of the drawings, elements having identical functions are provided with identical signs, and descriptions thereof have been omitted.

The following description supposes an image encoding apparatus and image decoding apparatus that segments an image into a plurality of macro blocks (hereinafter, referred to as "MB"), and that carries out encoding or decoding in raster scan order every MB. Moreover, the MB are segmented into a plurality of prediction units, and a predicted image is generated for every prediction unit. A prediction unit subjected to processing at that time is called a region subjected to prediction.

1.1 TM prediction section 105

First described is a TM prediction section 105, which is a component common in the image encoding apparatus 100 and the image decoding apparatus 150, with reference to Figs. 2 and 3.

Fig. 2 is a block diagram illustrating a configuration of the TM prediction section 105. The TM prediction section 105 includes a search region setting section 101, a template setting section 102, a template comparison section 103, and a predicted image generation section 104. The TM prediction section 105 carries out template matching based on prediction unit information #106 (later described) and a decoded image #109 stored in a frame memory 109 (later described), and generates a predicted image #105 based on a result of the template matching. The prediction unit information #106 includes, as described later, information indicative of a shape and a position of the region subjected to prediction.

In the following description of the TM prediction section 105, the prediction unit information #106 is to be indicative of coordinates of pixels of an upper left corner of the region subjected to prediction (having an upper left corner pixel of an input image be its origin) as the position of the region subjected to prediction, in addition to width and height of the region subjected to prediction. The width of the region subjected to prediction is indicated as puw, the height of the region subjected to prediction is indicated as puh, and the position of the region subjected to prediction, i.e., the coordinates of the pixel on the upper left corner of the region subjected to prediction is indicated as (pux, puy). Units of the puw, puh, pux, and puy are all "pixels". A preferable size of the prediction unit in the present embodiment is described later; in the description of the TM prediction section 105 however, there is no need to presuppose a prediction unit of a specific size in particular.

<Template setting section 102>

The template setting section 102 sets a template corresponding to the region subjected to prediction based on the received prediction unit information #106, and outputs template information #102, which is information related to the template.

More specifically, in a case in which the region subjected to prediction is of a rectangle being shaped long sideways, the template setting section 102 sets a region adjacent to a top side of the region subjected to prediction as the template, which region has a width same as the width of the region subjected to prediction and has a height of one pixel. Namely, in a case in which puw ≥ puh, a region of a size of puw × 1 pixels that is positioned on (pux, puy-1) is set as the template. On the other hand, in a case in which the region subjected to prediction is of a vertically oriented rectangle, the template setting section 102 sets a region adjacent to a left side of the region subjected to prediction as the template, which region has a height same as the region subjected to prediction and has a width of one pixel. Namely, when puw < puh, a region having a size of 1 × puh at a position of (pux-1, puy) is set as the template. A template in a case in which the region subjected to prediction is sized as 4 × 1 pixels is illustrated in (a) of Fig. 3. Illustrated in (a) of Fig. 3 is a view of the region subjected to prediction and its corresponding template. The search region illustrated in (a) of Fig. 3 is described later.

<Search region setting section 101>

The search region setting section 101 sets, based on the received prediction unit information #106 and template information #102, a search region corresponding to the region subjected to prediction, and outputs search region information #101, which is information related to that search region.

More specifically, in a case in which the region subjected to prediction is of a rectangular shape being long sideways, the search region setting section 101 sets, as the search region, a region positioned on a relative coordinate with respect to the region subjected to prediction (pixel units) of (-α, -2), which region has a width of (width of region subjected to prediction + 2α) pixels and a height of one pixel. In other words, when puw ≥ puh, a region having a size of (puw + 2α) × 1 pixels at a position of (pux-α, puy-2) is set as the search region. In the embodiment, value α is a predetermined parameter (not less than 0) indicative of a size of the search region, and for example is α = 1. On the other hand, in the case in which the region subjected to prediction is of a vertically oriented rectangle, the search region setting section 101 sets, as the search region, a region positioned on a relative coordinate of (-2, -α) with respect to the region subjected to prediction, which region has a height of (height of region subjected to prediction + 2α) pixels and a width of one pixel. In other words, when puw < puh, a region positioned on (pux-2, puy-α) having a size of 1 pixel × (puh+2α) pixels is set as the search region. Illustrated in (a) of Fig. 3 is a search region whose size of the region subjected to prediction is 4 × 1 pixels.

<Template comparison section 103>

The template comparison section 103 carries out template matching based on the template information #102, the search region information #101, and a decoded image #109 recorded in a frame memory 109 later described, to derive and output a predicted image generation parameter #103. The predicted image generation parameter #103 is information indicative of a position of a region approximating to the region subjected to prediction. For example, as the predicted image generation parameter #103, a position of a partial region (a position with respect to the template) approximating to the decoded image on the template most accurately can be used, among partial regions within the search region. In this case, the predicted image generation parameter #103 can be derived from the following steps S1 to S3.

(Step S1) First, the template comparison section 103 generates a list of search candidates. The search candidates are partial regions within a searched region congruent with the template. In the embodiment, the search candidates are identifiable by a search index assigned to that searched region. For example, as shown in (b) of Fig. 3, when the size of the template is $4 \times 1$ pixels and the size of the searched region is $8 \times 1$ pixels, the template comparison section 103 sets five kinds of search candidates from a left edge of the searched region, depending on an offset value spos (0, 1, 2, 3, 4). In this case, the offset values can be used as search indices.

(Step S2) Subsequently, the template comparison section 103 calculates, for each of the search candidates, an evaluation value indicative of a dissimilarity of a decoded image on the template with a decoded image on the search candidate. The evaluation value used here is, for example SAD (Sum of Absolute Difference) and SSD (Sum of Squared Difference), etc.

(Step S3) Next, the template comparison section 103 identifies a search candidate which has a smallest dissimilarity calculated in step S2 (i.e. a search candidate most approximating to the template). Thereafter, a relative position with respect to the template of the identified search candidate is calculated, to output as the predicted image generation parameter #103 indicative of the calculated position.

Note that depending on the size of the search candidate and processing order of prediction units within the MB, there are cases in which no decoded image is included, in a portion of the search candidates. In this case, a duplicate of a pixel included in the decoded image that is closest to the pixels is used instead of the pixels in which no decoded image is included within the search candidate.

<Another example of setting method of search candidate>

The description above exemplified a setting method of a search candidate in the template comparison section 103, however the search candidate may be set in another method. For example, the predicted image generation parameter #103 can be derived with a smaller number of processes by reducing the number of search candidates, although this causes a decrease in precision. On the other hand, it is possible to set a position of the search candidate in the search region in a unit smaller than one pixel, for example in units of 0.5 pixel or 0.25 pixel. In this case, as a pixel value of the decoded image in the search candidates, an interpolated value is used, which is obtainable by applying an interpolation filter to a pixel value of the decoded image in an integral position. This allows for adjusting the position of the search candidate minutely, thereby making it possible to carry out template matching to furthermore search candidates. Hence, although this causes an increase in workload, it is possible to increase a possibility that a search candidate more approximating to the decoded image on the template is detected.

<Predicted image generation section 104>

The predicted image generation section 104 generates a predicted image #105 corresponding to the region subjected to prediction, based on the predicted image generation parameter #103 derived by the template comparison section 103, and the decoded image #109 stored in the frame memory 109.

Provided that a relative position with respect to the template of the search candidate approximating to the template is (sx, sy), which relative position is included in the predicted image generation parameter #103, pixel values P (pux+i, puy+j) of the predicted image (where i and j satisfy $0 \leq i < $ puw and $0 \leq j < $ puh, respectively) is derived by the following equation:

$$P(pux+i, puy+j) = Ir(pux+sx+i, puy+sy+j).$$

In the embodiment, Ir(x, y) indicates a pixel value of the pixel (x, y) of the decoded image. When the x or y is a decimal, an interpolated pixel value is used, which is generated by applying an interpolation filter to a pixel value of the decoded image in the vicinity thereof.

As described above, the TM prediction section 105 generates the predicted image #105 corresponding to the region subjected to prediction, based on the received inputted prediction unit information #106 and the decoded image #109 stored in the frame memory 109.

1.2 MB encoding section 110

Next described is an MB encoding section 110 that includes the TM prediction section 105 as a component, with reference to Figs. 1, and 4 through 6. The MB encoding section 110 encodes an input image corresponding to a respective MB and generates encoded data that corresponds to that MB; as described later, the MB encoding section 110 is used in the image encoding apparatus 100.

Fig. 1 is a block diagram illustrating a configuration of the MB encoding section 110. The MB encoding section 110 includes the TM prediction section 105, a prediction unit segmenting section 106, a prediction residual encoding section 107, a decoded image generation section 108, and the frame memory 109.

In the following description, the MB that is to be processed in the MB encoding section 110 is called process-subjected MB.

<Prediction unit segmenting section 106>

The prediction unit segmenting section 106 segments the process-subjected macro block to a predetermined unit (hereinafter, referred to as "prediction unit"), and outputs prediction unit information #106 which is information related to the prediction units. The prediction unit information #106 includes information related to position and size of the prediction units.

Moreover, the following description is provided by exemplifying a case in which a size of the process-subjected macro block is 16 pixels × 16 pixels. However, the present invention is not limited to this, and is applicable with respect to a size of a common macro block.

An example of segmenting the process-subjected macro blocks into the prediction units by the prediction unit segmenting section 106 is illustrated in (a) through (d) of Fig. 4. In Fig. 4, (a) illustrates a case in which a size of the prediction unit is 16 pixels × 1 pixel, (b) illustrates a case in which the size of the prediction unit is 1 pixel × 16 pixels, (c) illustrates a case in which the size of the prediction units is 4 pixels × 1 pixel, and (d) illustrates a case in which the size of the prediction unit is 1 pixel × 4 pixels.

As shown in (a) of Fig. 4, in a case in which the size of the prediction unit is 16 pixels × 1 pixel, the prediction unit segmenting section 106 segments the process-subjected macro block into 16 prediction units that are aligned in a vertical direction, by segmentation lines extending in a sideways direction. Moreover, as shown in (b) of Fig. 4, in a case in which the size of the prediction unit is 1 pixel × 16 pixels, the prediction unit segmenting section 106 segments the process-subjected macro block into 16 prediction units that are aligned in a sideways direction, by segmentation lines extending in a vertical direction. As illustrated in (c) of Fig. 4, in a case in which the size of the prediction unit is 4 pixels × 1 pixel, the prediction unit segmenting section 106 segments the process-subjected macro block into a total of 64 prediction units, having 16 units aligned in the vertical direction and 4 units aligned in the sideways direction. Moreover, as illustrated in (d) of Fig. 4, in a case in which the size of the prediction unit is 1 pixel × 4 pixels, the prediction unit segmenting section 106 segments the process-subjected macro blocks into a total of 64 prediction units, 4 units aligned in the vertical direction, and 16 units aligned in the sideways direction.

Moreover, a prediction unit index is assigned to each prediction unit. As illustrated in (a) through (d) of Fig. 4, the prediction unit indices are each an integer of not less than 0, and are assigned to the prediction units in raster scan order within the macro block, in ascending order. The prediction unit information #106 is successively outputted in the ascending order of the prediction unit indices.

<Prediction residual encoding section 107>

The prediction residual encoding section 107 generates encoded data #110 and decoding residual #107, based on received predicted image #105 corresponding to a respective prediction unit, prediction unit information #106, and input image #113. The encoded data #110 and the decoding residual #107 are generated by carrying out the following steps S11 through S 15.

(Step S11) First, the prediction residual encoding section 107 identifies the region subjected to prediction based on the received prediction unit information #106, and generates a differential image between the input image #113 and the predicted image #105 in the region subjected to prediction, i.e. a prediction residual.

(Step S12) Subsequently, the prediction residual encoding section 107 applies, to the prediction residual generated in step S11, a frequency transformation of identical size as the size of the prediction unit (e.g. 16 × 1 DCT (Discrete Cosine Transform) to a prediction unit of 16 × 1 pixels), to generate a transform coefficient of the prediction residuals. In other words, the prediction residual encoding section 107 carries out a frequency transformation for every unit for quantization having an identical size as that of the prediction units, to generate a transform coefficient of the prediction residual. In the embodiment, the frequency transformation indicates an orthogonal transformation that transforms a space domain expression of an image to a frequency domain expression.

(Step S13) Subsequently, the prediction residual encoding section 107 quantizes the transform coefficient generated in step S12, to generate a quantization transform coefficient.

(Step S 14) Thereafter, the prediction residual encoding section 107 applies a variable-length encoding method such as CABAC and CAVLC to the quantization transform coefficient generated in step S 13, to generate a variable-length code, and output this variable-length code as the encoded data #110.

(Step S15) Moreover, the prediction residual encoding section 107 applies inverse quantization to the quantization transform coefficient generated in step S13, and thereafter applies inverse transformation of frequency transformation (inverse frequency transformation) applied in the step S12, to generate and output the decoding residual #107.

The present invention is not limited to the foregoing steps. For example, the frequency transformation in step S12 may be omitted, so that the prediction residual is directly quantized in step 13.

<Decoded image generation section 108>

The decoded image generation section 108 generates a decoded image #108 by adding a predicted image #105 to the received decoding residual #107, and outputs this decoded image #108.

<Frame memory 109>

The frame memory 109 stores the received decoded image # 108. At a point in time in which a specific MB is to be encoded, the frame memory 109 stores decoded images corresponding to all of the MB that are earlier in the raster scan order than that specific MB.

<MB encoding process>

The following describes an encoding process in the MB encoding section 110 described above, with reference to Fig. 5. Fig. 5 is a flow chart showing steps carried out in the MB encoding section 110 of encoding the input image #113 corresponding to the process-subjected MB to generate the encoded data #110.

(Step S21) First, the prediction unit segmenting section 106 and the prediction residual encoding section 107 receives the input image #113 inputted into the MB encoding section 110, which input image #113 corresponds to the process-subjected MB. The prediction unit segmenting section 106 segments the input image #113 into N prediction units of a predetermined size, and assigns a prediction unit index (puid) to each of the prediction units, which index is an integer in a range of not less than 0 to not more than N-1.

(Step S22) Next, a prediction unit having a smallest puid out of prediction units whose decoded image has not been completed is set as the region subjected to prediction. The prediction unit information # 106 corresponding to the region subjected to prediction is inputted from the prediction unit segmenting section 106 to the TM prediction section 105 and the prediction residual encoding section 107.

(Step S23) The TM prediction section 105 carries out template matching on the decoded image #109 stored in the frame memory 109, based on the prediction unit information #106 received in the step S22. Thereafter, the TM prediction section 105 generates a predicted image #105 corresponding to the region subjected to prediction based on a result of the template matching, and is outputted to the prediction residual encoding section 107 and the decoded image generation section 108.

(Step S24) The prediction residual encoding section 107 generates the encoded data #110 corresponding to the region subjected to prediction, based on the predicted image #105 generated in step S23, the prediction unit information #106 generated in step S22, and the input image #113.

(Step S25) Moreover, the prediction residual encoding section 107 generates the decoding residual # 107 corresponding to the region subjected to prediction, based on the predicted image #105 generated in step S23, the prediction unit information #106 generated in step S22, and the input image #113, and this generated decoding residual #107 is outputted to the decoded image generation section 108. The decoded image generation section 108 generates a decoded image #108 corresponding to the region subjected to prediction, based on the received decoding residual #107 and the predicted image #105 inputted in step S23, and is stored into the frame memory 109.

(Step S26) If the generation of the decoded images #108 corresponding to all of the prediction units within the process-subjected MB is completed, the process is terminated; if not, the process proceeds to step S22.

The foregoing steps S21 to S26 allows for the MB encoding section 110 to generate, from the input image #113 corresponding to the process-subjected MB, the encoded data #110 corresponding to the same MB, and output the encoded data #110.

<Effect of encoding in MB encoding section 110>

In a case in which the input image #113 in units of MB is encoded in the MB encoding section 110, it is possible to generate the predicted image #105 of a region including curved edges and straight-line edges of various directions, with high prediction accuracy. The following description explains effects thereof in details, with reference to Fig. 6.

The following description is provided on the assumption of a prediction unit of $16 \times 1$ pixels, however a similar effect is achievable in cases using prediction units that have a width or a height of 1 pixel (e.g. prediction units of $8 \times 1$ pixels, $4 \times 1$ pixels, $1 \times 16$ pixels, $1 \times 8$ pixels, $1 \times 4$ pixels). Moreover, similar effects are achievable with use of prediction units having an extremely short height as compared to its width (e.g. prediction units of $8 \times 2$ pixels, $16 \times 2$ pixels) and prediction units having an extremely short width as compared to its height (e.g. prediction units of $2 \times 8$ pixels, $2 \times 16$ pixels).

First considered is a region in which two curved edges are included in the MB, which curved edges extend from an upper part of the MB to a lower part thereof, and whose curvature increases as the curved edge extends downwards of the MB (see (a) of Fig. 6).

In a case in which such a region is predicted by a prediction method called direction prediction, the predicted image can be generated by assuming a direction of the broken line illustrated in (b) of Fig. 6 and extrapolating a pixel adjacent on an upper side of the MB in that direction. However, with the direction prediction, although it is possible to accurately approximate the curved edge in the upper part of the MB having a small curvature, there is a problem that this accuracy decreases in the lower part of the MB.

Moreover, when intra TM prediction is to be carried out, which uses a square region as the prediction unit, there is the problem that no curved edge with a matching curvature would be detected even if the region corresponding to the curved edge having the large curvature in the lower part of the MB is searched for, from a region in which the decoded image is included, as illustrated in (c) of Fig. 6.

On the other hand, encoding with use of the MB encoding section 110 is carried out as described below. Illustrated in (d) of Fig. 6 is an encoding process in a case in which encoding is carried out in the MB encoding section 110, with use of $16 \times 1$ pixels as the prediction unit.

First, a prediction unit of $16 \times 1$ pixels positioned in a top part of the MB is set as a region subjected to prediction. A template of $16 \times 1$ pixels is set one pixel upper of that region subjected to prediction, and further the search region is set one pixel upper of the template. Carrying out the template matching under this condition allows for detecting a misalignment (included in the predicted image generation parameter #103 derived in the template comparison section 103 of Fig. 2) in position of an edge in the region subjected to prediction from a position of the edge one pixel upper of the region subjected to prediction, to generate the predicted image #105 of the region subjected to prediction based on this misalignment. Thereafter, as described above, the decoded image #108 of the region subjected to prediction is generated, and is stored in the frame memory 109.

Next, the region subjected to prediction shifts to the prediction unit one pixel lower, and the predicted image #105 and the decoded image #108 are similarly generated. Subsequently, the region subjected to prediction is similarly shifted lower by one pixel each, to repeat the generation of the predicted image #105 and the decoded image #108.

The generation of the predicted image #105 is always carried out by detecting a misalignment between the position of the edge in the region subjected to prediction and the position of the edge in the one pixel upper of the region subjected to prediction, for any prediction unit set as the region subjected to prediction to generate the predicted image.

Therefore, even with a curved edge that varies in curvature within the MB as illustrated in (a) of Fig. 6, it is possible to generate a predicted image by detecting the misalignment in edge position between the region subjected to prediction and the region one pixel upper of the region subjected to prediction, that is, the curvature of the curved edge.

Therefore, using the MB encoding section 110 allows for generating a predicted image #105 with high accuracy even for a region including a curved edge that varies in curvature within the MB. Accordingly, it is possible to encode such a region with high encoding efficiency. Similarly, with a straight-line edge, the predicted image can be generated by detecting an inclination of the straight line, by detecting a misalignment in edge position of the region subjected to prediction and a region one pixel upper of the region subjected to prediction. Therefore, using the MB encoding section 110 allows for encoding a region including straight-line edges of various inclinations, with high encoding efficiency.

<Another example of output order of prediction unit information # 106>

The above describes that the prediction unit segmenting section 106 successively outputs the prediction unit information #106 in ascending order of the prediction unit indices, however the present invention is not limited to this. Namely, the output order of the prediction unit information #106 in the prediction unit segmenting section 106 does not necessarily need to be the ascending order of the prediction unit index.

For example, in the case in which the prediction unit is of a rectangular shape being long sideways, it is preferable that the order of process is earlier as the prediction unit is closer to the top side of the MB. This makes the decoded image on the template and search region be included at a time in which the TM is carried out in the TM prediction section, thereby allowing for improving the accuracy of the predicted image. For the similar reason, in a case in which the prediction unit is of a vertically oriented rectangle, it is preferable that the order of process is earlier as the prediction unit is closer to a left side of the MB.

1.3 Image encoding apparatus 100

Next described is an image encoding apparatus 100 including the MB encoding section 110 as a component, with reference to Fig. 7. Fig. 7 is a block diagram illustrating a configuration of the image encoding apparatus 100 according to the present invention.

As illustrated in Fig. 7, the image encoding apparatus 100 includes the MB encoding section 110, a header information determining section 111, a header information encoding section 112, an MB setting section 113, and a variable-length code multiplexing section 114.

The image encoding apparatus 100 receives an input image #100. The image encoding apparatus 100 carries out an encoding process to the input image #100, and outputs encoded data #180.

The header information determining section 111 determines header information based on the input image #100. The determined header information is outputted as header information #111. The header information #111 includes an image size of the input image #100. The header information #111 is inputted into the MB setting section 113 and also into the header information encoding section 112.

The header information encoding section 112 encodes the header information #111 and outputs encoded header information #112. The encoded header information #112 is inputted into the variable-length code multiplexing section 114.

The MB setting section 113 segments the input image #100 into a plurality of macro blocks, based on the input image # 100 and the header information #111. The MB setting section 113 inputs the input image #100 into the MB encoding section 110 in macro block units.

The MB encoding section 110 encodes the input image #113 of one macro block worth that is successively received, to generate the MB encoded data #110. The generated MB encoded data #110 is inputted into the variable-length code multiplexing section 114.

The variable-length code multiplexing section 114 multiplexes the encoded header information #112 and the MB encoded data #110, and generates and outputs the encoded data #180.

Note that, in order to distinguish from the encoded data #180 as a result of multiplexing the encoded header information #112, the encoded data #110 generated in the MB encoding section 110 (i.e. the encoded data #110 prior to the multiplexing of the encoded header information #112) is called "MB encoded data" in the embodiment.

1.4 MB decoding section 153

Next described is an MB decoding section 153 that outputs a decoded image # 190 in units of MB, upon receiving the encoded data #110 in units of MB generated in the MB encoding section 110, with reference to Figs. 8 and 9.

Fig. 8 is a block diagram illustrating a configuration of the MB decoding section 153. The MB decoding section 153 includes a TM prediction section 105, a decoded image generation section 108, a frame memory 109, a prediction unit setting section 151, and a prediction residual decoding section 152.

The prediction unit setting section 151 is activated at a point in which the encoded data #110 in units of MB is received, and successively outputs prediction unit information #151 indicative of a position and size of the prediction unit inside the MB. The same method as the segmentation method employed in the prediction unit segmenting section 106 of the MB encoding section 110 (see Fig. 1) may be employed as the segmentation method of the MB into the prediction units. Moreover, the order in which the prediction unit information #151 is outputted can be in the same order as the order employed in the prediction unit segmenting section 106.

The prediction residual decoding section 152 employs variable-length coding and decoding to the received encoded data #110 in units of MB, to generate a transform coefficient corresponding to a prediction unit indicated by the received prediction unit information #151. Subsequently, an inverse DCT transformation (inverse transformation of DCT) is employed to the generated transform coefficient, of identical size as the size of the prediction unit indicated by the prediction unit information #151 to generate and output a decoding residual #152.

<Decoding process in MB decoding section 153>

The following describes steps of generating the decoded image #190 by decoding the encoded data #110 corresponding to a specific MB, in the MB decoding section 153 described above, with reference to Fig. 9. Fig. 9 is a flow chart illustrating steps of the decoding process carried out in the MB decoding section 153.

(Step S31) First, the encoded data #110 corresponding to the process-subjected MB received by the MB decoding section 153 is inputted into the prediction unit setting section 151 and the prediction residual decoding section 152. The prediction unit setting section 151 segments the process-subjected MB into N prediction units of a predetermined size, and assigns a prediction unit index (puid) to each of the prediction units, which index is an integer in a range of 1 to N.

(Step S32) Next, the prediction unit setting section 151 sets a prediction unit having a smallest puid out of prediction units whose decoded image has not been completed, as the region subjected to prediction. The prediction unit information #151 corresponding to the region subjected to prediction is inputted into the TM prediction section 105 and prediction residual decoding section 152.

(Step S33) Subsequently, the TM prediction section 105 carries out template matching on the decoded image #109 stored in the frame memory 109, based on the prediction unit information #151 generated in step S32. Thereafter, the TM prediction section 105 generates a predicted image #105 corresponding to the region subjected to prediction based on a result of the template matching, and is outputted to the decoded image generation section 108.

(Step S34) The prediction residual decoding section 152 generates a decoding residual #152 corresponding to the region subjected to prediction based on the prediction unit information #151 generated in step S32 and the encoded data #110, and is outputted to the decoded image generation section 108.

(Step S35) The decoded image generation section 108 generates a decoded image #190 corresponding to the region subjected to prediction, based on the predicted image #105 received in the step S33 and the decoding residual #152 generated in the step S34. The decoded image #190 is outputted outside the MB decoding section 153 and is further stored in the frame memory 109.

(Step S36) If the generation of the decoded images #190 corresponding to all of the prediction units within the process-subjected MB is completed, the process is terminated; if not, the process proceeds to step S32.

By carrying out the foregoing steps, the MB decoding section 153 can generate, from the encoded data #110 corresponding to the process-subjected MB, the decoded image #190 corresponding to that same MB.

1.5 Image decoding apparatus 150

Next described is an image decoding apparatus 150 including the MB decoding section 153 described above as a component, with reference to Fig. 10. The image decoding apparatus 150 receives the encoded data #180 generated in the image encoding apparatus 100 as input to generate and output the decoded image #190.

Fig. 10 is a block diagram illustrating a configuration of the image decoding apparatus 150. As illustrated in Fig. 10, the image decoding apparatus 150 includes an MB decoding section 153, a variable-length code inverse multiplexing section 154, a header information decoding section 155, and an MB setting section 156.

The encoded data #180 received by the image decoding apparatus 150 is inputted into the variable-length code inverse multiplexing section 154. The variable-length code inverse multiplexing section 154 inverse multiplexes the received encoded data #180, to separate the encoded data #180 into (i) header encoded data #154a which is encoded data related to header information and (ii) MB encoded data #154b which is encoded data related to macro blocks. The variable-length code inverse multiplexing section 154 then outputs the header encoded data #154a to the header information decoding section 155 and the MB encoded data #154b to the MB setting section 156.

The header information decoding section 155 decodes header information #155 from the header encoded data # 154a. In the embodiment, the header information #155 is information including a size of the input image.

The MB setting section 156 separates the MB encoded data #154b to encoded data #156 that correspond to respective MB, based on the received header information #155, and successively outputs the encoded data #156 to the MB decoding section 153.

The MB decoding section 153 generates decoded images #190 each corresponding to a respective one of the MB by successively decoding the received encoded data #156 corresponding to the respective MB, and outputs the decoded images #190. At a point in which the decoded image generating process in units of MB is completed by the MB decoding section 153 for all MB inside the image, the generation process of the decoded image #190 corresponding to the encoded data received by the image decoding apparatus 150 is completed.

1.6 Conclusion

As described above, an image encoding apparatus 100 according to the present invention is an image encoding apparatus that encodes a subject image segmented into a plurality of blocks, the encoding being carried out every block (MB), the image encoding apparatus including: quantization means (prediction residual encoding section 107) for quantizing a subject image on a subject block (subject MB) that is segmented into a plurality of rectangular regions (prediction units) in such a manner that longer sides of the rectangular regions are arranged adjacent to each other, the quantizing being carried out in consecutive units for quantization, the units for quantization including at least one rectangular region (prediction unit), the quantization means quantizing a prediction residual obtained by subtracting a predicted image from the subject image on a subject unit for quantization; inverse quantization means (prediction residual encoding section 107) for generating a decoded image, on the subject block (subject MB), in the units for quantization, the inverse quantization means generating the decoded image on the subject unit for quantization by adding, to the predicted image, a prediction residual obtained by inverse quantizing a quantized value generated in the quantization means; and predicted image generation means (TM prediction section 105) for generating the predicted image for every rectangular region (prediction unit), the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

According to the image encoding apparatus, a region having a highest correlation with the template is searched for by one-dimensionally scanning a region on a decoded image obtained by parallel shifting on the rectangular region in a longer side direction. As a result, with the image encoding apparatus, the computational complexity during carrying out a search can be reduced as compared to when scanning is carried out two-dimensionally as in the technique disclosed in Patent Literature 1. This allows for generating a predicted image in high speed.

Moreover, the image decoding apparatus carries out a search every rectangular region. This enables accurate generation of a predicted image as compared to the technique disclosed in Patent Literature 1, even in a case in which the subject image includes an edge whose curvature varies. Namely, even in the case in which the subject image includes an edge whose curvature varies, a high encoding efficiency is achieved.

Moreover, as described above, the image decoding apparatus 150 according to the present invention is an image decoding apparatus that generates a decoded image segmented into a plurality of blocks (MB), the decoded image being generated every block, the image decoding apparatus including: inverse quantization means (prediction residual decoding section) for generating a decoded image on a subject block (subject MB) that is segmented into a plurality of rectangular regions in such a manner that longer sides of the rectangular regions are arranged adjacent to each other, the decoded image being generated in units for quantization, the units for quantization including at least one rectangular region (prediction unit), the inverse quantization means generating the decoded image on a subject unit for quantization by adding, to a predicted image, a prediction residual obtained by inverse quantizing a quantization value; and predicted image generation means (TM prediction section 105) for generating the predicted image for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

Hence, according to the image decoding apparatus 150, it is possible to generate the predicted image in high speed. Moreover, an effect is brought about that even if the subject image includes an edge whose curvature varies, the image decoding apparatus is capable of accurately generating the predicted image since the search is carried out in units of the rectangular regions.

Embodiment 2

The following description deals with an image encoding apparatus 300 and an image decoding apparatus 350, which are second embodiments of the image encoding apparatus and image decoding apparatus according to the present invention, with reference to Figs. 11 to 15. Parts identical to those already described are provided with identical signs, and their descriptions have been omitted.

2.1 Image encoding apparatus 300

Described below is the image encoding apparatus 300 according to the present embodiment, with reference to Figs. 11 through 13.

Fig. 11 is a block diagram illustrating a configuration of the image encoding apparatus 300 according to the present embodiment. As illustrated in Fig. 11, the image encoding apparatus 300 includes a header information determining section 111, a header information encoding section 112, an MB setting section 113, a variable-length code multiplexing section 114, and an MB encoding section 205.

The header information determining section 111, the header information encoding section 112, the MB setting section 113, and the variable-length code multiplexing section 114 have already been described, so the following description deals with the MB encoding section 205.

2.1.1 MB encoding section 205

The following describes the MB encoding section 205 provided in the image encoding apparatus 300 illustrated in Fig. 11, with reference to Fig. 12. The MB encoding section 205 generates and outputs encoded data #205, based on the input image #113 corresponding to the process-subjected MB outputted from the MB setting section 113.

Fig 12 is a block diagram illustrating a configuration of the MB encoding section 205. As illustrated in Fig. 12, the MB encoding section 205 includes a prediction unit structure comparison section 201, a prediction unit segmenting section 202, a TM prediction section 105, a prediction residual encoding section 107, a decoded image generation section 108, a frame memory 109, a side information encoding section 203, and an MB encoded data multiplexing section 204.

The TM prediction section 105, the prediction residual encoding section 107, the decoded image generation section 108, and the frame memory 109 have already been described, so the following description deals with a prediction unit structure comparison section 201, a prediction unit segmenting section 202, a side information encoding section 203, and the MB encoded data multiplexing section 204.

<Prediction unit structure comparison section 201>

The prediction unit structure comparison section 201 analyzes the input image #113 corresponding to the process-subjected MB, and selects a prediction unit suitable for the MB out of prediction units included in a predetermined prediction unit set. Moreover, the prediction unit structure comparison section 201 outputs prediction unit structure information #201, which is information indicative of a structure of the selected prediction unit.

Described below is an example of a case in which the predetermined prediction unit set includes a prediction unit of $16 \times 1$ pixels and a prediction unit of $1 \times 16$ pixels. The present invention however is not limited to this, and other various combinations are possible as the combination in the prediction unit sets. It is preferable that the predetermined prediction unit set includes a vertically oriented rectangular prediction unit and a rectangular prediction unit being shaped long sideways.

Moreover, by using the vertically oriented rectangular shape as a prediction unit and using pixels upper of the prediction unit for the prediction, it is possible to accurately predict an edge possessing directivity close to a straight line in the vertical direction. On the other hand, by using the rectangle being shaped long sideways as the prediction unit and using the pixels in a left side of the prediction unit for the prediction, it is possible to accurately predict an edge possessing directivity close to a straight line in a horizontal direction.

Hence, by including both the prediction unit of the vertically aligned rectangular shape and the prediction unit of the rectangular shape being long sideways in the prediction unit set, prediction with high accuracy is possible even in a case in which the edge in the input image #113 is close to either of vertical or horizontal.

Moreover, the prediction unit structure comparison section 201 selects a prediction unit having a high encoding efficiency, out of the prediction units included in the prediction unit set.

For example, the prediction unit structure comparison section 201 selects a prediction unit in accordance with a result of a rate-distortion decision. Namely, the prediction unit structure comparison section 201 calculates an encoded amount R and a distortion D (SSD of input image and decoded image on the process-subjected MB) when the input image #113 of the process-subjected MB is encoded with use of the prediction units, to the prediction units included in the preset prediction unit set, to calculate an evaluation value RD = R + Dλ, and select any one prediction unit out of the prediction units in accordance with the results. More specifically, a prediction unit resulting with a smaller evaluation value RD is selected.

Moreover, the prediction unit structure information #201 indicative of a structure of the selected prediction unit is outputted to the prediction unit segmenting section 202 and the side information encoding section 203.

The prediction unit structure comparison section 201 may select the prediction unit by analyzing a directivity of the edge, or may select the prediction unit by another method.

<Prediction unit segmenting section 202>

The prediction unit segmenting section 202 segments the input image #113 corresponding to the process-subjected MB into predetermined prediction units that is set based on the prediction unit structure information #201. Moreover, the prediction unit segmenting section 106 outputs prediction unit information #106, which is information related to the prediction units. The prediction unit information #106 includes information of position and size of the prediction units, as described above.

Moreover, each of the prediction units are assigned with a prediction unit index, as already described with reference to (a) through (d) of Fig. 4.

<Side information encoding section 203>

The side information encoding section 203 generates side information #203 based on the prediction unit structure information #201. The generated side information #203 is outputted to the MB encoded data multiplexing section 204.

For example, in a case in which the prediction unit set includes two prediction units of 16 × 1 pixels and 1 × 16 pixels, the side information encoding section 203 generates a bit string 0 when the prediction unit indicated by the prediction unit structure information #201 is the 16 × 1 pixels, and generates a bit string 1 when the prediction unit indicated by the prediction unit structure information #201 is 1 × 16 pixels.

Moreover, in a case in which the prediction unit set includes four prediction units, of 16 × 1 pixels, 1 × 16 pixels, 4 × 1 pixels, and 1 × 4 pixels, the side information encoding section 203 generates a bit string 00 as the side information #203 when the prediction unit indicated by the prediction unit structure information #201 is the 16 × 1 pixels, generates a bit string 10 when the prediction unit indicated by the prediction unit structure information #201 is the 1 × 16 pixels, generates a bit string 01 when the prediction unit indicated by the prediction unit structure information #201 is the 8 × 1 pixels, and generates a bit string 11 when the prediction unit indicated by the prediction unit structure information #201 is the 1 × 8 pixels. In the embodiment, the high order digit of the bit string is information indicative of a long side direction of the prediction unit, and the low order digit of the bit string is information indicative of size of the prediction unit. By carrying out encoding separately for information related to a direction of the prediction unit (direction information) and information related to size of the prediction unit (size information), a same symbol becomes easily apparent continuously in the digit indicative of the direction information, of the bit strings. This allows for carrying out the encoding process more efficiently. For example, by configuring a new bit string by collecting bits of digits indicative of the direction information and applying Huffman coding or arithmetic coding to the bit string, it is possible to reduce bit count of that bit string by use of the unevenness in probability of occurrence of the symbol.

<MB encoded data multiplexing section 204>

The MB encoded data multiplexing section 204 generates and outputs encoded data #205, based on the encoded data #110 outputted from the prediction residual encoding section 107, and the side information #203 outputted from the side information encoding section 203.

Fig. 13 is a view illustrating a bit stream configuration of the encoded data #205. As illustrated in Fig. 13, the encoded data #205 includes side information #203 indicative of which prediction unit is being selected out of the prediction unit sets, and the encoded data #110.

<Effect of encoding process in MB encoding section 205>

By using the MB encoding section 205 described above, it is possible to improve the encoding efficiency in encoding the input image #113 in units of MB.

More specifically, the prediction unit structure comparison section 201 allows for selecting a prediction unit most suitable for a local characteristic of the input image #113, that is, a prediction unit having a highest encoding efficiency out of the plurality of prediction units included in the prediction unit set, and allows for encoding the input image #113 with use of that prediction unit. Hence, an effect is achieved that the encoding efficiency improves.

Moreover, by having the prediction unit set include a prediction unit of the vertically oriented rectangular shape and a prediction unit of a rectangular shape being long sideways, it is possible to efficiently encode the input image #113 having various characteristics.

As described above, by use of the MB encoding section 205, it is possible to encode with a high encoding efficiency.

2.2 Image decoding apparatus 350

Next described is an image decoding apparatus 350 according to the present embodiment, with reference to Figs. 14 and 15. The image decoding apparatus 350, upon receiving the encoded data #181, generates and outputs a decoded image #254.

Fig. 14 is a block diagram illustrating a configuration of the image decoding apparatus 350. As illustrated in Fig. 14, the image decoding apparatus 350 includes a variable-length code inverse multiplexing section 154, a header information decoding section 155, an MB setting section 156, and an MB decoding section 254.

The variable-length code inverse multiplexing section 154, the header information decoding section 155, and the MB setting section 156 have already been described, so in the following description, the MB decoding section 254 is explained.

2.2.1 MB decoding section 254

Described below is the MB decoding section 254 provided in the image decoding apparatus 350 illustrated in Fig. 14, with reference to Fig. 15. The MB decoding section 254 successively decodes the encoded data #156 outputted from the MB setting section 156, which encoded data #156 corresponds to a respective one of the MB, to generate and output a decoded image #254 corresponding to the respective MB.

Fig. 15 is a block diagram illustrating a configuration of the MB decoding section 254. As illustrated in Fig. 15, the MB decoding section 254 includes an MB encoded data inverse multiplexing section 251, a side information decoding section 253, a prediction unit setting section 252, a prediction residual decoding section 152, a TM prediction section 105, a decoded image generation section 108, and a frame memory 109.

The prediction residual decoding section 152, the TM prediction section 105, the decoded image generation section 108, and the frame memory 109 have already been described, so the following description deals with the MB encoded data inverse multiplexing section 251, the side information decoding section 253, and the prediction unit setting section 252.

<MB encoded data inverse multiplexing section 251>

The MB encoded data inverse multiplexing section 251 separates the encoded data #156 into side information #251b and encoded data #251a in units of MB, by inverse multiplexing. The side information #251b is outputted to the side information decoding section 253, and the encoded data #251a in units of MB are outputted to the prediction unit setting section 252 and the prediction residual decoding section 152. The side information #251b is information corresponding to the side information #203 described above.

<Side information decoding section 253>

The side information decoding section 253 decodes the side information #251b, to generate prediction unit structure information #253. The prediction unit structure information #253 is information corresponding to the prediction unit structure information #201.

<Prediction unit setting section 252>

The prediction unit setting section 252 generates prediction unit information #252 indicative of position and size of the prediction units inside the MB, based on the encoded data #251a in units of MB and the prediction unit structure information #253, and successively outputs this information in a predetermined order.

<Effect of decoding with MB decoding section 254>

By use of the MB decoding section 254 configured as above, it is possible to carry out a decoding process with use of an optimum prediction unit included in the side information, i.e., a prediction unit having a highest encoding efficiency. This achieves an effect of improving decoding efficiency.

As described above, the image encoding apparatus 300 according to the present embodiment includes, in addition to the configuration of the image encoding apparatus 100 according to Embodiment 1, segmenting means (prediction unit structure comparison section 201) for segmenting each of a plurality of blocks (MB) into a plurality of rectangular regions (prediction units) in such a manner that longer sides thereof are arranged adjacent to each other, the segmenting means switching a longer side direction of the plurality of rectangular regions every block.

Moreover, as described above, the image encoding apparatus 300 according to the present embodiment further includes flag encoding means (side information encoding section 203) for encoding, for each of the plurality of blocks (MB), a flag (prediction unit structure information #201) indicative of the longer side direction of the plurality of rectangular regions (prediction units).

Accordingly, it is possible to generate encoded data having high encoding efficiency, which encoded data is decodable with a decoding apparatus, by referring to the flag.

Embodiment 3

Described below is a third embodiment of the image encoding apparatus and the image decoding apparatus according to the present invention, with reference to Figs. 16 to 20. Parts having identical configurations as those already described are provided with identical signs, and their descriptions have been omitted.

3.1 MB encoding section 309

The following describes an MB encoding section 309 included in the image encoding apparatus according to the present embodiment, with reference to Fig. 16. The image encoding apparatus according to the present embodiment includes the MB encoding section 309 as a replacement of the MB encoding section 110 in the image encoding apparatus 100 described above.

Fig. 16 is a block diagram illustrating a configuration of the MB encoding section 309 provided in the image encoding apparatus according to the third embodiment. As illustrated in Fig. 16, the MB encoding section 309 includes a quantization unit segmenting section 306, a prediction unit segmenting section 106, a TM prediction section 305, a frame memory 109, a prediction residual encoding section 307, and a decoded image generation section 308.

The MB encoding section 309 receives the input image #113 in units of MB, and outputs encoded data #309.

The quantization unit segmenting section 306 segments the input image #113 into a plurality of units for quantization. In the embodiment, the units for quantization are to be sized larger than the size of the prediction units. Moreover, information related to the size of the units for quantization is outputted as quantization unit information #306.

The TM prediction section 305 receives the quantization unit information #306 outputted from the quantization unit segmenting section 306 and the prediction unit information #106 outputted from the prediction unit segmenting section 106, and outputs a predicted image #305. Details of the TM prediction section 305 are described later with reference to a different drawing.

The prediction residual encoding section 307 generates and outputs encoded data #309 and decoding residual #307, based on the predicted image #305, the quantization unit information #306, the prediction unit information # 106, and the input image #113.

The decoded image generation section 308 generates and outputs a decoded image #308 by adding the predicted image #305 to the received decoding residual #307. The outputted decoded image #308 is stored in the frame memory 109.

3.1.1 TM prediction section 305

The following describes in more details the TM prediction section 305 provided in the MB encoding section 309 illustrated in Fig. 16, with reference to Figs. 17 and 19.

Fig. 17 is a block diagram illustrating a configuration of the TM prediction section 305. As illustrated in Fig. 17, the TM prediction section 305 includes a search region setting section 301, a template setting section 302, a template comparison section 303, and a predicted image generation section 304.

The template setting section 302 sets a template corresponding to the region subjected to prediction, based on the quantization unit information #306 and the prediction unit information #106, and outputs template information #302, which is information related to the template.

The search region setting section 301 sets a search region corresponding to the region subjected to prediction based on the quantization unit information #306 and the prediction unit information #106, and outputs search region information #301, which is information related to the search region.

Fig. 19 is a view for describing operations of the template setting section 302 and the search region setting section 301. As illustrated in Fig. 19, the template is set outside the units for quantization including the region subjected to prediction.

Moreover, as illustrated in Fig. 19, it is preferable that the template is selected from a region closest to the region subjected to prediction, out of the regions positioned outside the transformation region that includes the region subjected to prediction. Moreover, as illustrated in Fig. 19, it is preferable that the search region is set as a region away from the template by a same distance as a distance between the region subjected to prediction and the template. Moreover, in the case in which the distance is long, it is preferable to take a range of the search region wide with respect to the distance.

The template comparison section 303 derives and outputs a predicted image generation parameter #303 by carrying out the template matching based on the template information #302, the search region information #301, and the decoded image #109. More specifically, the template comparison section 303 finds a search candidate most approximating to a template indicated by the template information #302 from a search region indicated by the search region information #301, and calculates a relative position (displacement) of the search candidate with respect to the template. Moreover, this relative position is outputted as a predicted image generation parameter #303, which is information indicative of the relative position.

The predicted image generation section 304 generates and outputs a predicted image #305 corresponding to the region subjected to prediction, based on the predicted image generation parameter #303 derived from the template comparison section 303 and a decoded image #109 stored in the frame memory 109. More specifically, the predicted image generation section 304 assigns, to each pixel in the region subjected to prediction, a pixel in a decoded image at a position shifted by the displacement indicated by the predicted image generation parameter #303.

3.2 MB decoding section 353

The following describes the MB decoding section 353 provided in the image decoding apparatus according to the present embodiment, with reference to Fig. 18. The image decoding apparatus according to the present embodiment includes the MB decoding section 353 as a replacement of the MB decoding section 153 in the image decoding apparatus 150 described above. The MB decoding section 353 receives the encoded data #156, and generates and outputs a decoded image #254.

Fig. 18 is a block diagram illustrating a configuration of the MB decoding section 353. The MB decoding section 353 includes a TM prediction section 305, a decoded image generation section 308, a frame memory 109, a prediction unit setting section 151, a quantization unit setting section 351, and a prediction residual decoding section 352.

The quantization unit setting section 351 successively outputs, in a predetermined order, quantization unit information #351 indicative of position and size of the units for quantization inside the MB.

The prediction residual decoding section 352 generates a transform coefficient applying variable-length coding and decoding to the received encoded data #156. Subsequently, the prediction residual decoding section 352 applies an inverse DCT transformation (inverse transformation of DCT) to the generated transform coefficient of a size identical to a size of the units for quantization indicated by the quantization unit information #351, to generate and output a decoding residual #352.

The decoded image generation section 308 in the MB decoding section 353 generates and outputs a decoded image #254 by adding the predicted image #305 to the inputted decoding residual #352.

3.3 MB encoding process in MB encoding section 309

Described below is an encoding process carried out in the MB encoding section 309 described above, with reference to Fig. 20. Fig. 20 is a flow chart showing steps carried out in the MB encoding section 309 to encode the input image #113 corresponding to the processing subject MB and generate encoded data #110.

(Step S41) First, the input image #113 inputted into the MB encoding section 309, which input image #113 corresponds to the process-subjected MB, is inputted into the quantization unit segmenting section 306, the prediction unit segmenting section 106, and the prediction residual encoding section 307. The quantization unit segmenting section 306 segments the input image #113 into M units for quantization of a predetermined size, and a quantization unit index (tuid) is assigned to each of the units for quantization, which is of an integer in a range of not less than 0 to not more than N-1.

(Step S42) Next, the prediction unit segmenting section 106 segments the input image #113 into N prediction units of a predetermined size, which prediction units are each assigned with a prediction unit index (puid) that is of an integer in a range of not less than 0 to not more than N-1.

(Step S43) Subsequently, a prediction unit having a smallest puid out of prediction units whose decoded image has not been completed is set as the region subjected to prediction. Moreover, the units for quantization including the region subjected to prediction are set as a transformation-subjected region. Moreover, the prediction unit information #106 corresponding to the region subjected to prediction is inputted from the prediction unit segmenting section 106 to the TM prediction section 305, and the quantization unit information #306 corresponding to the transformation-subjected region is inputted from the quantization unit segmenting section 306 to the TM prediction section 305.

(Step S44) Thereafter, the TM prediction section 305 carries out template matching on the decoded image #109 stored in the frame memory 109, based on the prediction unit information #106 and the quantization unit information #306. Moreover, based on a result thereof, the predicted image #305 corresponding to the region subjected to prediction is generated. The predicted image #305 is outputted to the prediction residual encoding section 307 and the decoded image generation section 308.

(Step S45) The MB encoding section 309 determines whether or not the predicted image #305 is generated for all the prediction units within the transformation-subjected region.

(Step S46) In a case in which a predicted image #305 is generated for all of the prediction units inside the transformation-subjected region (Yes in step S45), the prediction residual encoding section 307 generates a decoding residual #307 of the transformation-subjected region.

(Step S47) The decoded image generation section 308, upon receiving the decoding residual #307 generated in the step S46, generates the decoded image #308 of the transformation-subjected region.

(Step S48) In a case in which the transformation-subjected region includes a prediction unit whose predicted image #350 has not been generated (No in step S45), or alternatively, in a case in which the decoded image #308 is generated in step S47, the MB encoding section 309 determines whether or not all the prediction units in the processing subject MB are decoded. In a case in which all of the prediction units in the processing subject MB are decoded, the encoding process of the processing subject MB is terminated (Yes in step S48), and in a case in which the processing subject MB includes a prediction unit that is not decoded yet (No in step S48), the process of step S43 is carried out.

By carrying out the foregoing steps S41 through S48, the MB encoding section 309 generates and outputs encoded data #309 corresponding to a same respective MB, the encoded data #309 being generated from the input image #113 corresponding to the process-subjected MB.

In the present embodiment, the size of the units for quantization is identical to the size of the prediction units or is larger than the size of the prediction units. Namely, the number M of the units for quantization is larger than a number N of the prediction units, and the units for quantization include one or a plurality of the prediction units.

3.4 Effect of encoding in MB encoding section 309

Use of the MB encoding section 309 allows for improving the encoding efficiency of encoding the input image #113 in units of MB. Moreover, use of the MB encoding section 309 reduces a processing time of the encoding process.

More specifically, use of the MB encoding section 309 allows for frequency transformation and quantization for each units for quantization, including a single prediction unit. This eliminates the correlation of the prediction units in the short side direction, thereby improving the encoding efficiency.

Moreover, the use of the MB encoding section 309 enables frequency transformation and quantization by the units of quantization including a plurality of prediction units. Namely, since it is possible to generate the predicted image #305 for each of the plurality of prediction units included in the single unit for quantization in parallel, an effect is brought about that the processing speed increases. Moreover, another effect is brought about that the processing load is reduced by carrying out such a parallel process.

3.5 Conclusion

As described above, in the present embodiment, the units for quantization include two or more rectangular regions (prediction units), and the predicted image generation means (TM prediction section 305) uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

According to the configuration, the units for quantization include two or more rectangular regions, that is, two or more prediction units. Furthermore, the predicted image of the prediction unit included in the units for quantization can be generated without referring to a decoded image on the same unit for quantization. Namely, according to the present invention, it is possible to process the plurality of prediction units included in the units for quantization, in parallel. Therefore, according to the configuration, it is possible to reduce the processing time of the encoding process.

Moreover, it is preferable that the units for quantization include two or more rectangular regions whose longer sides face each other, the quantization means (prediction residual encoding section 107) carries out frequency transformation in the units for quantization, the inverse quantization means (prediction residual encoding section 107) carries out inverse frequency transformation in the units for quantization, the inverse frequency transformation being an inverse transformation of the frequency transformation, and the predicted image generation means (TM prediction section 305) uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

According to the configuration, the unit for quantization includes two or more rectangular regions whose longer sides face each other, that is to say, two or more prediction units whose longer sides face each other. Furthermore, the predicted image of the prediction unit included in the unit for quantization can be generated without referring to the decoded image on the same unit for quantization. This hence allows for applying the frequency transformation in the unit for quantization, thereby eliminating the correlation in the short side of the prediction unit, which as a result further improves the encoding efficiency.

4. Supplementary Matter

<Supplementary Matter 1>

The present invention is not limited to the embodiments described above.
For example, in a case in which a difference between a DC value of the template and a DC value of the search candidate positioned upper of the template is small, the TM prediction section 105 of Embodiment 1 may set a DC value of a region one pixel upper of the prediction unit, which region has an identical shape as the prediction unit, to a prediction value of pixels in that prediction unit (hereinafter, called "flat prediction").
More specifically, the TM prediction section 105:

(Step SA1) first calculates a difference ΔDC between a DC value of a decoded image on the template and a DC value of a decoded image on the search candidate,
(Step SA2) calculates a performance index Ev with use of ΔDC, by an equation of Ev = ΔDC × ΔDC × (number of pixels in template), and
(Step SA3) when the performance index Ev is smaller than all dissimilarities (SSD) calculated in the template comparison section 103, the flat prediction is selected, and
(Step SA4) when the flat prediction is selected, a value of pixels in the region subjected to prediction serve as a DC value of the template.

The substantially same applies with Embodiments 2 and 3.
Use of the flat prediction allows for reducing workload of the encoding process while maintaining a high encoding efficiency. Moreover, the flat prediction is particularly effective in encoding of a flat part of an MB in which a mixture of an edge part and the flat part exist.

<Supplementary Matter 2>

Moreover, the image encoding apparatus according to the present invention may segment the process-subjected MB into a plurality of sub blocks, and select, for every sub block, whether to use (i) prediction by the template matching or (ii) direction prediction such as intra prediction in H.264/AVC.
Such a selection allows for encoding with use of a prediction method more appropriate with respect to a local characteristic possessed by the process-subjected MB. This allows for improving the encoding efficiency.

<Supplementary Matter 3>

Moreover, the image encoding apparatus according to the present invention may carry out reversible transformation with a predetermined length in the shorter side direction of the prediction unit before the quantized transform coefficient is encoded.
More specifically, the image decoding apparatus according to the present invention may carry out encoding by following the following steps:

(Step SA2 1) First, quantized transform coefficient of all prediction units are derived.
(Step SA22) Next, reversible transformation is carried out to a transform coefficient group including quantized transform coefficients corresponding to a same frequency component in prediction units inside the process-subjected MB.
(Step SA23) Subsequently, the value having been subjected to the reversible transformation in step SA22 is variable-length coded.

By carrying out such encoding, it is possible to carry out encoding by use of a correlation in the shorter side direction of the prediction units in the prediction residual. Hence, it is possible to carry out encoding more efficiently.

<Supplementary Matter 4>

Moreover, the image decoding apparatus according to the present invention may switch prediction units and prediction methods based on characteristics of the decoded image on the template.
For example, the image decoding apparatus according to the present invention determines whether or not an edge is included on the template by use of an index such as a variance of pixel values of the pixels of the decoded image on the template; in a case in which an edge is included, a prediction unit of 4 × 1 pixels is selected and DCT may be carried out in that size, and in a case in which no edge is included, a prediction unit of 16 × 1 pixels is selected and DCT may be carried out in that size.

Generally in the case in which no edge is included, the encoding efficiency can be improved by carrying out the DCT in a wide range. By having such a configuration, it is possible to select an appropriate prediction unit while causing no increase in the side information.

Moreover, the image decoding apparatus according to the present invention may use the flat prediction described above in a case in which the variance of the pixel values of the pixels in the decoded image on the template is small.

Generally, out of the edge parts and flat parts of the process-subjected MB, the flat part has a lower variance in pixel value of the pixels. Moreover, as to the flat parts, it is possible to reduce the workload of the encoding process by use of the flat prediction described above.

Therefore, by employing such a configuration, it is possible to reduce the workload required for encoding while maintaining a high encoding efficiency.

The present invention is not limited to the description of the embodiments above, but may be altered by a skilled person within the scope of the claims. An embodiment based on a proper combination of technical means disclosed in different embodiments is encompassed in the technical scope of the present invention.

(Additional Matters)

For example, the present invention may also be described as follows.

1. An image encoding apparatus that encodes a subject image segmented into a plurality of blocks, the encoding being carried out every block, the image encoding apparatus including: quantization means for quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in consecutive units for quantization, the units for quantization including at least one rectangular region; inverse quantization means for generating a decoded image on the subject block in the units for quantization, the inverse quantization means generating the decoded image on a subject unit for quantization by adding, to the predicted image, a prediction residual obtained by inverse quantizing a quantized value generated in the quantization means; and predicted image generation means for generating the predicted image on the subject block for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

2. The image encoding apparatus recited in 1., wherein the units for quantization include a single rectangular region, and the predicted image generation means uses, as a template, a rectangular region on the decoded image, positioned adjacent to the longer side of the subject rectangular region, and searches for a region having a highest correlation with the template out of regions on the decoded image obtained by parallel shifting a rectangular region adjacent to a longer side of the template in the longer side direction.

3. The image encoding apparatus recited in 1., wherein the units for quantization include two or more rectangular regions, and the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

4. The image encoding apparatus recited in 3., wherein the quantization means quantizes each of prediction residuals obtained from the two or more rectangular regions, in parallel.

5. The image encoding apparatus recited in any one of 1. through 4., wherein each of the plurality of rectangular regions is a rectangular region whose width in a shorter side direction is one pixel.

6. The image encoding apparatus recited in any one of 1. through 5., further including segmenting means for segmenting each of the plurality of blocks into a plurality of rectangular regions in such a manner that longer sides of the rectangular regions are arranged adjacent to each other, the segmenting means changing a longer side direction of the plurality of rectangular regions every block.

7. The image encoding apparatus recited in 6., wherein the segmenting means changes the longer side direction of the plurality of rectangular regions every block in response to its encoding efficiency.

8. The image encoding apparatus recited in any one of 1. to 7., further including flag encoding means for encoding, for each of the plurality of blocks, a flag indicative of the longer side direction of the plurality of rectangular regions.

9. A data structure of encoded data obtained by encoding a subject image segmented into a plurality of blocks, the encoding being carried out every block, the data structure including encoded data generated by quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in consecutive units for quantization, the units for quantization including at least one rectangular region, the predicted image on the subject block being generated for every rectangular region, and predicted images on the rectangular regions being generated by using, as a template, a rectangular region facing a longer side of a subject rectangular region on the decoded image, and searching for a region having a highest correlation with the template out of regions on a decoded image obtained by parallel shifting a rectangular region in a longer side direction, the rectangular region facing a longer side of the template opposite of a side of the template that faces the subject rectangular region.

10. An image decoding apparatus that generates a decoded image segmented into a plurality of blocks, the decoded image being generated every block, the image decoding apparatus including: inverse quantization means for generating a decoded image on a subject block that is segmented into a plurality of rectangular regions in such a manner that longer sides of the rectangular regions are arranged adjacent to each other, the decoded image being generated in consecutive units for quantization, the units for quantization including at least one rectangular region, the inverse quantization means generating the decoded image on a subject unit for quantization by adding, to a predicted image, a prediction residual obtained by inverse quantizing a quantization value; and predicted image generation means for generating the predicted image for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

11. A method of encoding a subject image segmented into a plurality of blocks, the encoding being carried out every block, the method including the steps of: quantizing a subject image on a subject block that is segmented into a plurality of rectangular regions in such a manner that longer sides of the rectangular regions are arranged adjacent to each other, the subject image being quantized in consecutive units for quantization, the unit for quantization including at least one rectangle region, and the subject image being quantized by quantizing a prediction residual obtained by subtracting a predicted image from the subject image on a subject unit for quantization; generating a decoded image on the subject block, in the units for quantization, the decoded image on a subject unit for quantization being generated by adding, to the predicted image, a prediction residual obtained by inverse quantizing a quantized value generated in the step of quantizing; and generating the predicted image on the subject block for every rectangular region, the predicted image being generated by using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

12. An image decoding method of generating a decoded image segmented into a plurality of blocks, the decoding being carried out every block, the image decoding method including: generating a decoded image on a subject block that is segmented into a plurality of rectangular regions in such a manner that longer sides of the rectangular regions are arranged adjacent to each other, the decoded image being generated in consecutive units for quantization, the unit for quantization including at least one rectangle region, the decoded image on a subject unit for quantization being generated by adding, to the predicted image, a prediction residual obtained by inverse quantizing a quantization value; and generating the predicted image on the subject block for every rectangular region, the predicted image being generated by using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

An image encoding apparatus according to the present invention is an image encoding apparatus that encodes a subject image segmented into a plurality of blocks, the encoding being carried out every block, the image encoding apparatus including: quantization means for quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in consecutive units for quantization, the units for quantization including at least one rectangular region; inverse quantization means for generating a decoded image on the subject block in the units for quantization, the inverse quantization means generating the decoded image on a subject unit for quantization by adding, to the predicted image, a prediction residual obtained by inverse quantizing a quantized value generated in the quantization means; and predicted image generation means for generating the predicted image on the subject block for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

According to the image encoding apparatus of the present invention, a rectangular region on the decoded image, which rectangular region faces a longer side of a subject rectangular region, is used as a template, and the predicted image on the subject rectangular region can be generated by searching for a region having a highest correlation with the template out of regions on a decoded image obtained by parallel shifting a rectangular region in a longer side direction, which rectangular region faces a longer side of the template opposite to a side of the template facing the subject rectangular region.

Namely, according to the image encoding apparatus, a region having a highest correlation with the template is searched for by one-dimensionally scanning a region on a decoded image obtained by parallel shifting on the rectangular region in a longer side direction. As a result, with the image encoding apparatus, the computational complexity during carrying out a search can be reduced as compared to when scanning is carried out two-dimensionally as in the technique disclosed in Patent Literature 1. This brings about an effect that a predicted image can be generated in high speed.

Moreover, the image encoding apparatus carries out a search every rectangular region. This enables accurate generation of a predicted image even in a case in which the subject image includes an edge whose curvature varies. Namely, even in the case in which the subject image includes an edge whose curvature varies, an effect is brought about that the encoding efficiency is high.

Moreover, it is preferable that the units for quantization include a single rectangular region, and the predicted image generation means uses, as a template, a rectangular region on the decoded image, positioned adjacent to the longer side of the subject rectangular region, and searches for a region having a highest correlation with the template out of regions on the decoded image obtained by parallel shifting a rectangular region adjacent to a longer side of the template in the longer side direction.

According to the configuration, it is possible to use, as a template, a rectangular region of a decoded image adjacent to a longer side of the subject rectangular region, so as to search for a region having a highest correlation with the template out of the regions of a decoded image obtained by moving in a parallel direction in a longer side direction of a rectangular region adjacent to a longer side of the template. Hence, it is possible to generate the predicted image by detecting a shift in the position of an edge in the region subjected to prediction and the position of the edge in a region adjacent to the region subjected to prediction. Namely, even in the case in which the edge is of a curved line, it is possible to generate the predicted image by detecting the curvature of the curved line. This brings about an effect that the encoding efficiency is improved even more.

Moreover, it is preferable that the units for quantization include two or more rectangular regions, and the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

According to the configuration, the unit for quantization includes two or more rectangular regions, i.e. two or more prediction units. Furthermore, predicted images of the prediction units included in the units for quantization can be generated without referring to the decoded image on the same unit for quantization. Namely, according to the present invention, it is possible to carry out parallel process of a plurality of prediction units included in the units for quantization. Accordingly, with the foregoing configuration, a further effect is brought about, that it is possible to reduce the processing time of the encoding process.

Moreover, it is preferable that the units for quantization include two or more rectangular regions whose longer sides face each other, the quantization means carries out frequency transformation in the units for quantization, the inverse quantization means carries out inverse frequency transformation in the units for quantization, the inverse frequency transformation being an inverse transformation of the frequency transformation, and the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

According to the configuration, the units for quantization include two or more rectangular regions whose longer sides face each other, i.e., include two or more prediction units whose longer sides face each other. Furthermore, the predicted image of the prediction units included in the units for quantization can be generated without referring to the decoded image of the unit for quantization. This makes it possible to apply frequency transformation in the units for quantization, thereby eliminating a correlation in the short side direction of the prediction units and bringing about a further effect that encoding efficiency can further be improved.

Moreover, it is preferable that each of the plurality of rectangular regions is a rectangular region whose width in a shorter side direction is one pixel.

According to the configuration, it is possible to generate a predicted image with use of a rectangular region having a width in a shorter side direction of one pixel. This allows for a more accurate prediction by more accurately detecting a curvature of an edge (curved line) in the region subjected to prediction. As a result, an effect is brought about that the encoding efficiency further improves.

Moreover, it is preferable that the image encoding apparatus includes segmenting means for segmenting each of the plurality of blocks into a plurality of rectangular regions in such a manner that longer sides of the rectangular regions are arranged adjacent to each other, the segmenting means changing a longer side direction of the plurality of rectangular regions every block.

According to the configuration, by including segmenting means which changes a longer side direction of the plurality of rectangular regions for each block, it is possible to generate the predicted image with use of a rectangular region having a longer side direction optimum for a local characteristic in the image to be encoded. This brings about a further effect, that it is possible to further improve the encoding efficiency.

Moreover, it is preferable that the image encoding apparatus further includes flag encoding means for encoding, for each of the plurality of blocks, a flag indicative of the longer side direction of the plurality of rectangular regions.

According to the configuration, the image encoding apparatus further includes flag encoding means for encoding a flag indicative of a longer side direction of the plurality of rectangular regions, for each of the plurality of blocks. This allows for carrying out decoding with reference to a respective flag when decoding encoded data with the image decoding apparatus. Accordingly, a further effect is brought about that it is possible to generate encoded data having a high encoding efficiency and which is decodable with a decoding apparatus.

Moreover, a data structure of encoded data according to the present invention is a data structure of encoded data obtained by encoding a subject image segmented into a plurality of blocks, the encoding being carried out every block, the data structure including encoded data generated by quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in consecutive units for quantization, the units for quantization including at least one rectangular region, the predicted image on the subject block being generated for every rectangular region, and predicted images on the rectangular regions being generated by using, as a template, a rectangular region facing a longer side of a subject rectangular region on the decoded image, and searching for a region having a highest correlation with the template out of regions on a decoded image obtained by parallel shifting a rectangular region in a longer side direction, the rectangular region facing a longer side of the template opposite of a side of the template that faces the subject rectangular region.

According to the data structure of the encoded data of the present invention, it is possible to carry out a decoding process in the decoding apparatus based on predicted images of the rectangular regions and quantized prediction residuals of units for quantization. As a result, an effect is brought about that it is possible to achieve a data structure of encoded data having high decoding efficiency.

Moreover, an image decoding apparatus according to the present invention is an image decoding apparatus that generates a decoded image segmented into a plurality of blocks, the decoded image being generated every block, the image decoding apparatus including: inverse quantization means for generating a decoded image on a subject block segmented into a plurality of rectangular regions in such a manner that longer sides of the rectangular regions are arranged adjacent to each other, the decoded image being generated in consecutive units for quantization, the units for quantization including at least one rectangular region, the inverse quantization means generating the decoded image on a subject unit for quantization by adding, to a predicted image, a prediction residual obtained by inverse quantizing a quantization value; and predicted image generation means for generating the predicted image for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

According to the image decoding apparatus of the present invention, a rectangular region on the decoded image, which rectangular region faces a longer side of a subject rectangular region, is used as a template, and the predicted image on the subject rectangular region can be generated by searching for a region having a highest correlation with the template out of regions on a decoded image obtained by parallel shifting a rectangular region in a longer side direction, which rectangular region faces a longer side of the template opposite to a side of the template facing the subject rectangular region.

Namely, according to the image decoding apparatus, a region having a highest correlation with the template is searched for by one-dimensionally scanning a region on a decoded image obtained by parallel shifting on the rectangular region in a longer side direction. As a result, with the image decoding apparatus, the computational complexity during carrying out a search can be reduced as compared to when scanning is carried out two-dimensionally as in the technique disclosed in Patent Literature 1. This brings about an effect that a predicted image can be generated in high speed.

Moreover, the image decoding apparatus carries out a search every rectangular region. This brings about an effect that it is possible for accurate generation of a predicted image even in a case in which the subject image includes an edge whose curvature varies.

Industrial Applicability

The present invention is suitably applicable to an image encoding apparatus that encodes an image, and an image decoding apparatus that decodes encoded image data.

Reference Signs List

| | |
|---|---|
| 100 | image encoding apparatus |
| 105 | TM prediction section (predicted image generation means) |
| 106 | prediction unit segmenting section |
| 107 | prediction residual encoding section (quantization means, inverse quantization means) |
| 108 | decoded image generation section |
| 109 | frame memory |
| 110 | MB encoding section |
| 150 | image decoding apparatus |
| 152 | prediction residual decoding section (inverse quantization means) |
| 203 | side information encoding section (flag encoding means) |

**Claims**

1. An image encoding apparatus that encodes a subject image segmented into a plurality of blocks, the encoding being carried out every block,
   the image encoding apparatus comprising:
   quantization means for quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in units for quantization, the units for quantization including at least one rectangular region selected from the plurality of rectangular regions;
   inverse quantization means for generating a decoded image on the subject block in the units for quantization, the inverse quantization means generating the decoded image on a subject unit for quantization by adding, to the predicted image, a prediction residual obtained by inverse quantizing a quantized value generated in the quantization means; and
   predicted image generation means for generating the predicted image on the subject block for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

2. The image encoding apparatus according to claim 1, wherein

the units for quantization include a single rectangular region, and
the predicted image generation means uses, as a template, a rectangular region on the decoded image, positioned adjacent to the longer side of the subject rectangular region, and searches for a region having a highest correlation with the template out of regions on the decoded image obtained by parallel shifting a rectangular region adjacent to a longer side of the template in the longer side direction.

3. The image encoding apparatus according to claim 1, wherein
the units for quantization include two or more rectangular regions, and
the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

4. The image encoding apparatus according to claim 1, wherein
the units for quantization include two or more rectangular regions whose longer sides face each other,
the quantization means carries out frequency transformation in the units for quantization,
the inverse quantization means carries out inverse frequency transformation in the units for quantization, the inverse frequency transformation being an inverse transformation of the frequency transformation, and
the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

5. The image encoding apparatus according to any one of claims 1 through 4, wherein
each of the plurality of rectangular regions is a rectangular region whose width in a shorter side direction is one pixel.

6. The image encoding apparatus according to any one of claims 1 through 5, further comprising:

segmenting means for segmenting each of the plurality of blocks into a plurality of rectangular regions in such a manner that longer sides of the rectangular regions are arranged adjacent to each other, the segmenting means changing a longer side direction of the plurality of rectangular regions every block.

7. The image encoding apparatus according to any one of claims 1 through 6, further comprising:

flag encoding means for encoding, for each of the plurality of blocks, a flag indicative of the longer side direction of the plurality of rectangular regions.

8. A data structure of encoded data obtained by encoding a subject image segmented into a plurality of blocks, the encoding being carried out every block,
the data structure comprising encoded data generated by quantizing a prediction residual obtained by subtracting a predicted image from a subject image on a subject block that is segmented into a plurality of rectangular regions in such a manner that longer sides of the rectangular regions are arranged adjacent to each other, the quantizing being carried out in units for quantization, the units for quantization including at least one rectangular region selected from the plurality of rectangular regions,
the predicted image on the subject block being generated for every rectangular region, and predicted images on the rectangular regions being generated by using, as a template, a rectangular region facing a longer side of a subject rectangular region on the decoded image, and searching for a region having a highest correlation with the template out of regions on a decoded image obtained by parallel shifting a rectangular region in a longer side direction, the rectangular region facing a longer side of the template opposite of a side of the template that faces the subject rectangular region.

9. An image decoding apparatus that generates a decoded image segmented into a plurality of blocks, the decoded image being generated every block,
the image decoding apparatus comprising:

inverse quantization means for generating a decoded image on a subject block that is segmented into a plurality of rectangular regions in such a manner that longer sides of the rectangular regions are arranged adjacent to each other, the decoded image being generated in units for quantization, the units for quantization including at least one rectangular region selected from the plurality of rectangular regions, the inverse quantization means generating the decoded image on a subject unit for quantization by adding, to a predicted image, a prediction residual obtained by inverse quantizing a quantization value; and

predicted image generation means for generating the predicted image for every rectangular region, the predicted image generation means using, as a template, a rectangular region on the decoded image, the rectangular region facing a longer side of a subject rectangular region, and searching for a region having a highest correlation with the template out of regions on a decoded image obtained by parallel shifting a rectangular region in a longer side direction, the rectangular region facing a longer side of the template opposite to a side of the template that faces the subject rectangular region, to generate the predicted image on the subject rectangular region.

**Amended claims under Art. 19.1 PCT**

1.  (Amended) An image encoding apparatus that encodes a subject image segmented into a plurality of blocks, the encoding being carried out every block,
the image encoding apparatus comprising:

prediction unit segmenting means for segmenting a subject block into a plurality of rectangular regions;
quantization means for quantizing a prediction residual obtained by subtracting a predicted image from a subject image on the subject block;
inverse quantization means for generating a decoded image on the subject block by adding, to the predicted image, a prediction residual obtained by inverse quantizing a quantized value generated in the quantization means; and
predicted image generation means for generating the predicted image on the subject block for every rectangular region, the predicted image generation means using, as a template, a rectangular region on the decoded image, the rectangular region facing a longer side of a subject rectangular region, and searching for a region having a high similarity, to generate the predicted image on the subject rectangular region.

2.  (Amended) The image encoding apparatus according to claim 1, wherein
the prediction unit segmenting means segments the subject block into a plurality of rectangular regions in such a manner that longer sides of the rectangular regions are adjacent to each other,
the quantization means quantizes the prediction residual in units for quantization, each unit for quantization including at least one rectangular region selected from the plurality of rectangular regions,
the inverse quantization means generates the decoded image on the subject block every unit for quantization, and
the predicted image generation means searching for a region having a high similarity with the template out of regions on a decoded image obtained by parallel shifting in a longer side direction a rectangular region facing a longer side of the template opposite to a side of the template that faces the subject rectangular region, to generate the predicted image on the subject rectangular region

3.  (Amended) The image encoding apparatus according to claim 2, wherein
the units for quantization include a single rectangular region, and
the predicted image generation means uses, as a template, a rectangular region on the decoded image, positioned adjacent to the longer side of the subject rectangular region, and searches for a region having a highest correlation with the template out of regions on the decoded image obtained by parallel shifting a rectangular region adjacent to a longer side of the template in the longer side direction.

4.  (Amended) The image encoding apparatus according to claim 2, wherein
the units for quantization include two or more rectangular regions, and
the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

5. (Amended) The image encoding apparatus according to claim 2, wherein
the units for quantization include two or more rectangular regions whose longer sides face each other,
the quantization means carries out frequency transformation in the units for quantization,
the inverse quantization means carries out inverse frequency transformation in the units for quantization, the inverse frequency transformation being an inverse transformation of the frequency transformation, and
the predicted image generation means uses, as a template, a rectangular region closest to the subject rectangular region out of rectangular regions on a decoded image, the rectangular region facing the longer side of the subject rectangular region, and searches for a region having a highest correlation with the template out of regions on the decoded image obtained by parallel shifting a rectangular region in the longer side direction, the rectangular region facing a longer side of the template opposite to the side of the template facing the subject rectangular region and being positioned from the template by a length equal to a length between the template and the subject rectangular region.

6. (Amended) The image encoding apparatus according to any one of claims 2 through 5, wherein
each of the plurality of rectangular regions is a rectangular region whose width in a shorter side direction is one pixel.

7. (Amended) The image encoding apparatus according to any one of claims 2 through 6, further comprising:

   segmenting means for segmenting each of the plurality of blocks into a plurality of rectangular regions in such a manner that longer sides of the rectangular regions are arranged adjacent to each other, the segmenting means changing a longer side direction of the plurality of rectangular regions every block.

8. (Amended) The image encoding apparatus according to any one of claims 2 through 7, further comprising:

   flag encoding means for encoding, for each of the plurality of blocks, a flag indicative of the longer side direction of the plurality of rectangular regions.

9. (Amended) A data structure of encoded data obtained by encoding a subject image segmented into a plurality of blocks, the encoding being carried out every block,
the data structure comprising encoded data generated by quantizing a prediction residual obtained by subtracting a predicted image from a subject image on a subject block that is segmented into a plurality of rectangular regions, the predicted image on the subject block being generated for every rectangular region, and predicted images on the rectangular regions being generated by using, as a template, a rectangular region facing a longer side of a subject rectangular region on the decoded image, and searching for a region having a high similarity with the template.

10. (New) An image decoding apparatus that generates a decoded image segmented into a plurality of blocks, the decoded image being generated every block,
the image decoding apparatus comprising:

   prediction unit segmenting means for segmenting a subject block into a plurality of rectangular regions;
   inverse quantization means for generating a decoded image on a subject block by adding, to a predicted image, a prediction residual obtained by inverse quantizing a quantization value; and
   predicted image generation means for generating the predicted image for every rectangular region, the predicted image generation means using, as a template, a rectangular region on the decoded image, the rectangular region facing a longer side of a subject rectangular region, and searching for a region having a high similarity with the template, to generate the predicted image on the subject rectangular region.

FIG. 1

FIG. 2

EP 2 493 196 A1

FIG. 3

(a)

4 PIXELS

SEARCH REGION

TEMPLATE

REGION
SUBJECTED TO
PREDICTION

(b)

SEARCH REGION

4 PIXELS

SEARCH CANDIDATE spos=0

spos=1

spos=2

spos=3

spos=4

FIG. 4

(a)

16 PIXELS

1 PIXEL

0
1
2
3
4
5
⋮
14
15

(b)

1 PIXEL

16 PIXELS

0 1 2 3 4 5 ⋯ 14 15

(c)

4 PIXELS

1 PIXEL

| 0 | 1 | 2 | 3 |
|---|---|---|---|
| 4 | 5 | 6 | 7 |
| 8 | ⋯ | | |
| | | | |
| | | | |
| | | | |
| | | | |
| | | | |
| | | | |
| | | | |
| | | | |
| | | | |
| | | | |
| | | | |
| | | 62 | 63 |

(d)

1 PIXEL

4 PIXELS

0 1 2 3 4 5 6 7 8 ⋯

16 17 18 ⋯

⋯ 61 62 63

FIG. 5

SEGMENT PROCESS-SUBJECTED MB
INTO N PREDICTION UNITS  S21

SET PREDICTION UNIT OF SMALLEST
INDEX OUT OF UNDECODED
PREDICTION UNITS AS REGION
SUBJECTED TO PREDICTION  S22

GENERATE PREDICTED IMAGE OF
REGION SUBJECTED TO PREDICTION
BY TEMPLATE MATCHING  S23

ENCODE PREDICTION RESIDUAL  S24

GENERATE DECODED IMAGE  S25

GENERATED DECODED
IMAGE FOR ALL PREDICTION
UNITS IN MB?  S26

NO

YES

FIG. 6

FIG. 7

EP 2 493 196 A1

FIG. 8

FIG. 9

SEGMENT PROCESS-SUBJECTED MB INTO N PREDICTION UNITS — S31

SET PREDICTION UNIT OF SMALLEST INDEX OUT OF UNDECODED PREDICTION UNITS AS REGION SUBJECTED TO PREDICTION — S32

GENERATE PREDICTED IMAGE OF REGION SUBJECTED TO PREDICTION BY TEMPLATE MATCHING — S33

DECODE PREDICTION RESIDUAL — S34

GENERATE DECODED IMAGE — S35

GENERATED DECODED IMAGE FOR ALL PREDICTION UNITS IN MB? — S36

NO

YES

FIG. 10

EP 2 493 196 A1

FIG. 11

EP 2 493 196 A1

FIG. 12

#113 → [PREDICTION UNIT SEGMENTING SECTION ~202]

[PREDICTION UNIT STRUCTURE COMPARISON SECTION ~201] #201

#106 → [TM PREDICTION SECTION ~105] #105

[PREDICTION RESIDUAL ENCODING SECTION ~107] #110

[MB CODED DATA MULTIPLEXING SECTION ~204] → #205

#109

[FRAME MEMORY ~109] ← #108 ← [DECODED IMAGE GENERATION SECTION ~108]

#107

[SIDE INFORMATION ENCODING SECTION ~203] #203

~205

40

EP 2 493 196 A1

FIG. 13

#205

#203          #110

FIG. 14

FIG. 15

FIG. 16

*Block diagram (FIG. 16): #113 input feeds into QUANTIZATION UNIT SEGMENTATING SECTION (306) and PREDICTION UNIT SEGMENTING SECTION (106). Signals #306 and #106 connect to TM PREDICTION SECTION (305), which outputs #305. PREDICTION RESIDUAL ENCODING SECTION (307) outputs #307 to DECODED IMAGE GENERATION SECTION (308), which outputs #308 to FRAME MEMORY (109). FRAME MEMORY outputs #109 back to TM PREDICTION SECTION. Overall block labeled 309 with output #309.*

FIG. 17

EP 2 493 196 A1

FIG. 18

## FIG. 19

SEARCH REGION

TEMPLATE

REGION SUBJECTED TO PREDICTION

TRANSFORMATION UNIT

FIG. 20

```
        ○
        │
        ▼                              ┌S41
┌──────────────────────────────┐
│ SEGMENT PROCESS-SUBJECTED MB INTO │
│      TRANSFORMATION UNITS        │
└──────────────────────────────┘
        │                              ┌S42
┌──────────────────────────────┐
│ SEGMENT PROCESS-SUBJECTED MB INTO │
│      N PREDICTION UNITS          │
└──────────────────────────────┘
        │                              ┌S43
┌──────────────────────────────┐
│   SET PREDICTION UNIT OF SMALLEST │
│  INDEX OUT OF UNDECODED PREDICTION │
│    UNITS AS REGION SUBJECTED TO   │
│ PREDICTION, AND SET TRANSFORMATION │
│   UNIT INCLUDING SAME REGION AS   │
│  TRANSFORMATION-SUBJECTED REGION  │
└──────────────────────────────┘
        │                              ┌S44
┌──────────────────────────────┐
│ GENERATE PREDICTED IMAGE OF REGION │
│    SUBJECTED TO PREDICTION BY     │
│       TEMPLATE MATCHING          │
└──────────────────────────────┘
```

S45 — GENERATED PREDICTED IMAGE FOR ALL PREDICTION UNITS IN TRANSFORMATION-SUBJECTED REGION?

YES

S46 — ENCODE PREDICTION RESIDUAL OF TRANSFORMATION-SUBJECTED REGION

S47 — GENERATE DECODED IMAGE OF TRANSFORMATION-SUBJECTED REGION

NO

S48 — DECODED ALL PREDICTION UNIT IN MB?

NO

YES

**INTERNATIONAL SEARCH REPORT**

International application No.

PCT/JP2010/066248

A. CLASSIFICATION OF SUBJECT MATTER
*H04N7/32(2006.01)i*

According to International Patent Classification (IPC) or to both national classification and IPC

B. FIELDS SEARCHED

Minimum documentation searched (classification system followed by classification symbols)
H04N7/26-7/68

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
IEEE Xplore

C. DOCUMENTS CONSIDERED TO BE RELEVANT

| Category* | Citation of document, with indication, where appropriate, of the relevant passages | Relevant to claim No. |
|---|---|---|
| A | JP 2007-43651 A (NTT Docomo Inc.), 15 February 2007 (15.02.2007), entire text; all drawings & US 2009/0116759 A1 & EP 1919223 A1 & WO 2007/004678 A1 & KR 10-2008-0019294 A & KR 10-2010-0019541 A & RU 2391794 C & CN 101218829 A | 1-9 |
| A | WO 2008/102805 A1 (Nippon Telegraph And Telephone Corp.), 28 August 2008 (28.08.2008), entire text; all drawings & US 2010/0027655 A & EP 2129135 A1 & CA 2676709 A & CN 101682774 A | 1-9 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
10 December, 2010 (10.12.10)

Date of mailing of the international search report
21 December, 2010 (21.12.10)

Name and mailing address of the ISA/
Japanese Patent Office

Authorized officer

Facsimile No.

Telephone No.

Form PCT/ISA/210 (second sheet) (July 2009)

**INTERNATIONAL SEARCH REPORT**

| International application No. |
|---|
| PCT/JP2010/066248 |

C (Continuation).    DOCUMENTS CONSIDERED TO BE RELEVANT

| Category* | Citation of document, with indication, where appropriate, of the relevant passages | Relevant to claim No. |
|---|---|---|
| A | Hongbo Zhu, Improved intra 4x4 DC prediction mode, ITU - Telecommunications Standardization Sector STUDY GROUP 16 Question 6, VCEG-AG15, Video Coding Experts Group (VCEG) 33rd Meeting: Shenzhen, China, 2007.10.20, pp.1-3 | 1-9 |
| A | Yung-Lyul Lee, Ki-Hun Han and Gary J. Sullivan, Improved lossless intra coding for H.264/MPEG-4 AVC, IEEE Transactions on Image Processing, Vol.15, No.9, IEEE, 2006.09, pp.2610-2615 | 1-9 |
| A | Thiow Keng Tan, Choong Seng Boon and Yoshinori Suzuki, Intra Prediction by Template Matching, IEEE International Conference on Image Processing (ICIP 2006), IEEE, 2006.10, pp.1693-1696 | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007300380 A


**Non-patent literature cited in the description**

- *ITU-T Recommendation H.264 (11/07,* November 2007